# EUROPÄISCHE PATENTSCHRIFT

(11) **EP 3 612 475 B1**
(45) Veröffentlichungstag und Bekanntmachung des Hinweises auf die Patenterteilung: **11.08.2021**
(21) Anmeldenummer: 19737652.8
(22) Anmeldetag: 26.06.2019
(51) Int. Cl.: B65G 35/06, B62D 65/18, F26B 15/14, F26B 25/00, B65G 47/52

(54) **BEHANDLUNGSANLAGE**
TREATMENT SYSTEM
INSTALLATION DE TRAITEMENT

(30) Priorität: 26.06.2018 DE 102018210435
(43) Veröffentlichungstag der Anmeldung: 26.02.2020
(73) Patentinhaber: Dürr Systems AG, 74321 Bietigheim-Bissingen (DE)
(72) Erfinder: IGLAUER-ANGRIK, Oliver, 70469 Stuttgart (DE); WOLL, Kevin, 74080 Heilbronn (DE); WIELAND, Dietmar, 71336 Waiblingen (DE); BAJSINI, Jasmin, 71665 Vaihingen (DE); EISENACHER, Friedhelm, 36251 Bad Hersfeld (DE)
(74) Vertreter: Hoeger, Stellrecht & Partner Patentanwälte mbB
(86) Internationale Anmeldenummer: PCT/DE2019/100594
(87) Internationale Veröffentlichungsnummer: WO 2020/001707

(56) Entgegenhaltungen:
- CA-A1- 2 167 621
- DE-A1- 4 222 349
- DE-A1-102012 207 312
- DE-U1- 9 422 327
- DE-U1-202007 009 590
- GB-A- 579 187
- US-A- 5 004 094
- US-A- 5 322 156
- US-A1- 2006 283 687
- US-A1- 2009 013 524

## Beschreibung

Die vorliegende Erfindung betrifft unter anderem das Gebiet der Behandlungsanlagen, insbesondere der Lackier- und Trocknungsanlagen für die Fahrzeugindustrie.

Ein Erfindungsaspekt befasst sich mit der Minimierung eines Fluidaustauschs zwischen benachbarten Räumen. Beispielsweise aus der DE 10 2010 043 087 A1 ist diesbezüglich ein Luftvorhang oder eine Luftschleuse bekannt, um einen Luftaustausch zwischen benachbarten Räumen zu minimieren.

Die US 5 322 156 A, die CA 2 167 621 A1, die DE 20 2007 009 590 U1, die US 2006/0283687 A1, die US 2009/0013524 A1 und die US 5 004 094 A offenbaren verschiedene Ausführungsformen von Förderanlagen zum Fördern von Gegenständen.

Die DE 94 22 327 U1, die DE 42 22 349 A1 und die DE 10 2012 207 312 A1 offenbaren verschiedene Ausführungsformen von Behandlungsanlagen.

DE 94 22 327 U1 offenbart die Behandlungsanlage nach dem Oberbegriff des Anspruchs 1.

Die GB 579 187 A offenbart eine Vorrichtung, mittels welcher ein Ausströmen von heißer Luft aus einem türlosen Ofen verhindert werden kann.

Der vorliegenden Erfindung liegt die Aufgabe zugrunde, eine Vorrichtung zur Minimierung eines Fluidaustauschs zwischen benachbarten Räumen zu schaffen, welche einfach aufgebaut ist und eine effiziente fluidwirksame Trennung zweier benachbarter Räume ermöglicht.

Diese Aufgabe wird erfindungsgemäß durch eine Behandlungsanlage gemäß Anspruch 1 gelöst.

Eine Trennvorrichtung zur Minimierung eines Fluidaustauschs zwischen benachbarten Räumen umfasst vorzugsweise Folgendes:
eine Düsenvorrichtung, mittels welcher ein Trennfluidstrom in einen Übergangsbereich zwischen den benachbarten Räumen einbringbar ist; und
ein bewegbares Blendenelement, mittels welchem eine die zwei benachbarten Räume miteinander verbindende Verbindungsöffnung zumindest abschnittsweise abdeckbar oder verschließbar ist.

Dadurch, dass die Trennvorrichtung vorzugsweise ein bewegbares Blendenelement zum zumindest abschnittsweisen Abdecken oder Verschließen der Verbindungsöffnung umfasst, kann eine fluidwirksame Trennung zwischen den benachbarten Räumen vorzugsweise optimiert werden. Insbesondere kann in Zusammenwirkung mit der Düsenvorrichtung ein Trennfluidstrom eine effizientere fluidwirksame Trennung zwischen den beiden benachbarten Räumen bewirken.

Durch das zumindest abschnittsweise Abdecken oder Verschließen der Verbindungsöffnung mittels des bewegbaren Blendenelements wird insbesondere eine freie Querschnittsfläche der Verbindungsöffnung verkleinert.

Mittels der Düsenvorrichtung ist vorzugsweise ein Luftvorhang erzeugbar.

Die Düsenvorrichtung umfasst vorzugsweise eine Schlitzdüse, welche einen solchen Luftvorhang erzeugt.

Das Trennfluid ist insbesondere Luft. Beispielsweise kann hierfür Frischluft, konditionierte Luft und/oder Abluft aus einem Behandlungsraum einer Behandlungsanlage vorgesehen sein.

Das Blendenelement ist insbesondere ein bewegbares Schild.

Vorzugsweise bildet das Blendenelement eine mechanische und/oder physikalische Barriere für die in den benachbarten Räumen angeordnete Luft.

Durch die Verwendung des bewegbaren Blendenelements kann insbesondere im Vergleich zu herkömmlichen Torlösungen eine reduzierte Störungsanfälligkeit der Trennvorrichtung erzielt werden. Zudem können vorzugsweise unerwünschte Querströmungen zwischen den benachbarten Räumen oder innerhalb der jeweiligen Räume vorzugsweise reduziert oder ganz vermieden werden.

Vorteilhaft kann es sein, wenn das Blendenelement einen Fluidführungsabschnitt zur Weiterleitung des Trennfluidstroms umfasst.

Der Fluidführungsabschnitt bildet insbesondere in einer Schließstellung des Blendenelements eine Düsenverlängerung zur Weiterleitung des Trennfluidstroms von der Düsenvorrichtung.

Das Blendenelement umfasst vorzugsweise eine Einlassöffnung, insbesondere einen Einlassschlitz, welcher insbesondere parallel zu einer Ausströmöffnung der Düsenvorrichtung angeordnet ist.

Das Blendenelement und/oder die Düsenvorrichtung erstrecken sich vorzugsweise zumindest näherungsweise über eine gesamte Breite des Übergangsbereichs und/oder der Verbindungsöffnung.

Insbesondere ragt das Blendenelement bezüglich der Schwerkraftrichtung von oben in die Verbindungsöffnung hinein.

Das Blendenelement kann beispielsweise zwei parallele Deckplatten, beispielsweise ebene Bleche, umfassen, welche beispielsweise mittels Verbindungsstegen und/oder Abstandshaltern beabstandet voneinander festgelegt sind. Zwischen den beiden Deckplatten ist insbesondere ein Fluidführungsabschnitt zur Weiterleitung des Trennfluidstroms gebildet.

Der Fluidführungsabschnitt ist insbesondere ein Hohlraum zwischen zwei Deckplatten des Blendenelements. Die beiden Enden des Fluidführungsabschnitts sind insbesondere schlitzförmig ausgebildet, so dass die Einlassöffnung insbesondere als Einlassschlitz ausgebildet ist, während die Auslassöffnung insbesondere als Auslassschlitz ausgebildet ist.

Die beiden Deckplatten können beispielsweise in einer, zwei oder allen drei Raumrichtungen zumindest näherungsweise identische Abmessungen aufweisen. Alternativ hierzu kann es vorgesehen sein, dass eine erste der beiden Deckplatten im Vergleich zu einer zweiten der beiden Deckplatten verkürzt ausgebildet ist, beispielsweise um mindestens ungefähr 10 %, vorzugsweise um mindestens ungefähr 25 %, insbesondere um mindestens ungefähr 40 %, einer maximalen und/oder durchschnittlichen Erstreckung der zweiten Deckplatte längs einer Hauptströmungsrichtung des Trennfluidstroms innerhalb des Blendenelements, insbesondere innerhalb des Fluidführungsabschnitts. Beide Deckplatten enden vorzugsweise gemeinsam an einem der Düsenvorrichtung zugewandten Ende des Blendenelements und erstrecken sich ausgehend davon entsprechend unterschiedlich weit in Richtung des der Düsenvorrichtung abgewandten Endes des Blendenelements.

Wenn die kürzere der beiden Deckplatten an einer einem Behandlungsraum abgewandten Außenseite des Blendenelements angeordnet ist, ergibt sich vorzugsweise eine Zumischung von Luft, insbesondere Kaltluft, von außerhalb des Behandlungsraums. Eine mittels der Trennvorrichtung erzeugbare Strömungswalze ist dann insbesondere eine Kaltluftwalze.

Alternativ hierzu kann jedoch auch vorgesehen sein, dass die kürzere der beiden Deckplatten an einer einem Behandlungsraum zugewandten Innenseite des Blendenelements angeordnet ist. Es ergibt sich dann vorzugsweise eine Zumischung von Luft, insbesondere Warmluft, von innerhalb des Behandlungsraums. Eine mittels der Trennvorrichtung erzeugbare Strömungswalze ist dann insbesondere eine Warmluftwalze.

Abhängig von einer Stellung des Blendenelements kann das über die Düsenvorrichtung zugeführte Trennfluid wahlweise bereits an der Ausströmöffnung der Düsenvorrichtung oder aber erst an einer Auslassöffnung des Blendenelements in den freien Raum im Übergangsbereich einströmen.

Vorteilhaft kann es sein, wenn das Blendenelement wahlweise in eine Schließstellung zum zumindest abschnittsweisen Abdecken oder Verschließen der Verbindungsöffnung oder in eine Offenstellung zur zumindest näherungsweise vollständigen Freigabe der Verbindungsöffnung bewegbar ist.

Die Trennvorrichtung umfasst vorzugsweise eine Antriebsvorrichtung zum Antreiben des Blendenelements. Insbesondere umfasst die Antriebsvorrichtung einen Elektromotor.

Günstig kann es sein, wenn die Trennvorrichtung eine Positioniervorrichtung umfasst, mittels welcher das Blendenelement bei einem Ausfall der Antriebsvorrichtung automatisch in die Offenstellung bewegbar ist. Die Positioniervorrichtung ist vorzugsweise eine von der Antriebsvorrichtung verschiedene Vorrichtung.

Beispielsweise kann vorgesehen sein, dass die Positioniervorrichtung ein oder mehrere Gewichte umfasst, welche ein Gegengewicht zu dem insbesondere drehbar gelagerten Blendenelement bilden und bei einem Ausfall der Antriebsvorrichtung das Blendenelement in die Offenstellung bewegen. Insbesondere ist das Blendenelement mittels der Positioniervorrichtung bei einem Ausfall der Antriebsvorrichtung aus einem Bewegungspfad von durch die Trennvorrichtung hindurchbewegten Gegenständen, insbesondere Werkstücken, heraus bewegbar, beispielsweise entgegen der Schwerkraftrichtung nach oben hochziehbar.

Es kann vorgesehen sein, dass das Blendenelement in der Schließstellung mit einer Einlassöffnung eines Fluidführungsabschnitts des Blendenelements einer Ausströmöffnung der Düsenvorrichtung zugewandt ist.

Insbesondere ist das Blendenelement in der Schließstellung mit einer Einlassöffnung eines Fluidführungsabschnitts des Blendenelements einer Ausströmöffnung der Düsenvorrichtung derart zugewandt, dass der aus der Ausströmöffnung ausströmende Trennfluidstrom durch die Einlassöffnung in den Fluidführungsabschnitt des Blendenelements hinein gerichtet ist.

Hierbei kann insbesondere vorgesehen sein, dass in der Schließstellung des Blendenelements die Ausströmöffnung der Düsenvorrichtung insbesondere berührungslos in die Einlassöffnung des Fluidführungsabschnitts mündet und/oder in dieselbe hineinragt.

Vorteilhaft kann es sein, wenn in der Schließstellung des Blendenelements die Ausströmöffnung der Düsenvorrichtung beabstandet von der Einlassöffnung des Fluidführungsabschnitts ist.

In einer Offenstellung des Blendenelements ist die Einlassöffnung vorzugsweise weiter von der Ausströmöffnung der Düsenvorrichtung entfernt als in der Schließstellung des Blendenelements. Alternativ oder ergänzend hierzu kann vorgesehen sein, dass die Einlassöffnung in der Offenstellung des Blendenelements bezüglich einer Hauptströmungsrichtung des Trennfluidstroms seitlich versetzt zu der Düsenvorrichtung angeordnet ist.

Günstig kann es sein, wenn in der Schließstellung des Blendenelements die Ausströmöffnung der Düsenvorrichtung zusammen mit der Einlassöffnung des Fluidführungsabschnitts eine Saugstrahldüse bildet.

Insbesondere können hierbei Schrägflächen, Verjüngungen und/oder Aufweitungen von Enden der Ausströmöffnung und/oder der Einlassöffnung vorgesehen sein, um eine Strömung des Trennfluids zu optimieren.

Insbesondere kann vorgesehen sein, dass die Einlassöffnung des Fluidführungsabschnitts einen trichterförmigen Abschnitt umfasst, in welchen die Ausströmöffnung der Düsenvorrichtung mündet.

Vorteilhaft kann es sein, wenn in der Schließstellung des Blendenelements zwischen der Düsenvorrichtung und dem Blendenelement ein oder mehrere Zusatzschlitze gebildet sind, durch welche Fluid aus einem der benachbarten Räume oder aus beiden benachbarten Räumen in den Fluidführungsabschnitt führbar, insbesondere saugbar, ist.

Die Zusatzschlitze sind insbesondere einander gegenüberliegend angeordnet und jeweils einem der voneinander zu trennenden benachbarten Räume zugewandt.

Mittels eines oder mehrerer Zusatzschlitze kann insbesondere eine Ringströmung, beispielsweise eine Strömungswalze, einfacher und somit energiesparender ausgebildet werden.

Ein durch die Düsenvorrichtung und/oder das Blendenelement hindurchgeführter Trennfluidstrom strömt beispielsweise bis in einen Bodenbereich des Übergangsbereichs und wird dort, beispielsweise unter Verwendung eines oder mehrerer Strömungsleitelemente, beispielsweise eines Silhouettenblechs, abgelenkt und/oder aufgeteilt, um letztlich eine fluidwirksame Trennung zwischen den benachbarten Räumen zu erzielen. Insbesondere wird mittels eines oder mehrerer Strömungsleitelemente die Ausbildung einer Strömungswalze begünstigt.

Vorteilhaft kann es sein, wenn die Trennvorrichtung eine oder mehrere Absaugöffnungen umfasst, mittels welcher ein Trennfluidstrom und/oder ein sonstiger Fluidstrom, insbesondere aus einem Übergangsbereich zwischen den zwei Räumen und/oder aus einem der Räume und/oder aus beiden Räumen, absaugbar ist.

Unter dem Begriff "Absaugen" ist dabei vorzugsweise ein aktives oder passives Abführen eines Teils oder des gesamten Fluidstroms im Übergangsbereich zwischen den zwei Räumen und/oder aus einem der Räume und/oder aus beiden Räumen zu verstehen.

Die eine oder die mehreren Absaugöffnungen sind insbesondere Bestandteil einer Umluftführung einer Behandlungsanlage, insbesondere einer Umluftführung in einem an die Trennvorrichtung angrenzenden Behandlungsraum der Behandlungsanlage.

Alternativ oder ergänzend hierzu kann vorgesehen sein, dass die eine oder die mehreren Absaugöffnungen beispielsweise zusammen mit der Düsenvorrichtung der Trennvorrichtung eine Umluftführung bilden, insbesondere unabhängig von einer Umluftführung oder einer sonstigen Fluidführung in den angrenzenden Räumen.

Günstig kann es sein, wenn ein Betrag eines Volumenstroms eines mittels der einen oder der mehreren Absaugöffnungen abführbaren Fluidstroms mindestens ungefähr 50 %, vorzugsweise mindestens ungefähr 100 %, vorzugsweise mindestens ungefähr 200 %, eines Betrags eines Volumenstroms eines mittels der Düsenvorrichtung zuführbaren Fluidstroms ist.

Alternativ oder ergänzend hierzu kann vorgesehen sein, dass ein Betrag eines Volumenstroms eines mittels der einen oder der mehreren Absaugöffnungen abführbaren Fluidstroms höchstens ungefähr 200 %, vorzugsweise höchstens ungefähr 100 %, vorzugsweise höchstens ungefähr 50 %, eines Betrags eines Volumenstroms eines mittels der Düsenvorrichtung zuführbaren Fluidstroms ist.

Vorteilhaft kann es sein, wenn einer oder mehreren Absaugöffnungen jeweils ein Ventilator oder jeweils mehrere Ventilatoren zum Antreiben des abzusaugenden Fluidstroms zugeordnet sind.

Eine oder mehrere Absaugöffnungen sind insbesondere in einem Bodenbereich der Trennvorrichtung angeordnet, insbesondere in einen Boden der Trennvorrichtung integriert.

Günstig kann es sein, wenn eine oder mehrere Absaugöffnungen punktuell angeordnet und/oder ausgebildet sind.

Insbesondere können zwei oder mehr als zwei Absaugöffnungen zu beiden Seiten einer Fördervorrichtung angeordnet sein.

Alternativ oder ergänzend hierzu kann vorgesehen sein, dass eine oder mehrere Absaugöffnungen linienförmig angeordnet und/oder ausgebildet sind. Insbesondere können eine oder mehrere Absaugöffnungen als Absaugschlitz ausgebildet sein. Eine Haupterstreckungsrichtung eines oder mehrerer Absaugschlitze ist insbesondere im Wesentlichen horizontal und/oder quer, insbesondere im Wesentlichen senkrecht, zu einer Förderrichtung.

Eine oder mehrere Absaugöffnungen sind insbesondere derart positioniert und/oder ausgebildet, dass ein aus der Düsenvorrichtung austretender Trennfluidstrom und/oder ein in der Schließstellung des Blendenelements aus dem Blendenelement austretender Trennfluidstrom auf die eine oder die mehreren Absaugöffnungen gerichtet ist.

Insbesondere sind die eine oder die mehreren Absaugöffnungen in der Schließstellung des Blendenelements in direkter Verlängerung des Blendenelements längs einer Strömungsrichtung des Trennfluidstroms an einer Auslassöffnung des Blendenelements angeordnet.

Das Blendenelement ist vorzugsweise an einer drehbaren Welle angeordnet oder umfasst eine drehbare Welle.

Mittels der drehbaren Welle oder zusammen mit der drehbaren Welle ist das Blendenelement vorzugsweise um eine Drehachse drehbar oder schwenkbar. Insbesondere ist die Drehachse des Blendenelements eine Längsmittelachse der Welle.

Günstig kann es sein, wenn die Drehachse des Blendenelements parallel zu der Ausströmöffnung der Düsenvorrichtung und/oder senkrecht zu einer noch zu beschreibenden Förderrichtung eines Fördersystems ausgerichtet ist.

Insbesondere ist die Drehachse vorzugsweise parallel zu einer Trennebene und/oder senkrecht zu einer oder mehreren Seitenwänden der benachbarten Räume.

Die Einlassöffnung, insbesondere der Einlassschlitz, des Blendenelements ist vorzugsweise in einem der Drehachse zugewandten Endbereich des Blendenelements angeordnet und/oder ausgebildet. Hierdurch kann die Einlassöffnung des Blendenelements vorzugsweise präzise positioniert werden, insbesondere relativ zu der Ausströmöffnung der Düsenvorrichtung.

Ein Wellendurchmesser der drehbaren Welle beträgt vorzugsweise mindestens ungefähr 50 mm, beispielsweise mindestens ungefähr 70 mm, und/oder höchstens ungefähr 250 mm, beispielsweise höchstens ungefähr 150 mm.

Die drehbare Welle und/oder das Blendenelement sind vorzugsweise an Seitenwänden der Trennvorrichtung und/oder der benachbarten Räume gelagert. Insbesondere kann hierdurch die Entstehung von Abrieb über einem durch die Trennvorrichtung verlaufenden Förderbereich vermieden werden.

Als Material für die Welle kann insbesondere Metall, beispielsweise Stahl oder Aluminium, vorgesehen sein. Insbesondere ist die Welle aus Stahl gebildet.

Als Material für das Blendenelement kann insbesondere Metall, beispielsweise Stahl oder Aluminium, vorgesehen sein. Insbesondere ist das Blendenelement aus Aluminium gebildet.

Günstig kann es sein, wenn das Blendenelement mittels einer Kompensationsvorrichtung an der drehbaren Welle angeordnet, insbesondere gelagert, ist.

Die Kompensationsvorrichtung umfasst beispielsweise ein oder mehrere Längenausgleichselemente zur Kompensation von thermischen Ausdehnungsänderungen der Welle und/oder des Blendenelements.

Bei einer Ausgestaltung kann vorgesehen sein, dass die Welle und das Blendenelement mittels einer Schraubverbindung miteinander verbunden sind, wobei ein oder mehrere Schraublöcher dann vorzugsweise als Langlöcher ausgebildet sind, um eine thermische Ausdehnungsänderung kompensieren zu können.

Günstig kann es sein, wenn die Welle und das Blendenelement bezüglich einer horizontal und senkrecht zu einer Förderrichtung verlaufenden Querrichtung und/oder bezüglich einer Haupterstreckungsrichtung der Welle und/oder bezüglich einer Drehachse des Blendenelements und/oder der Welle zumindest näherungsweise mittig unbeweglich miteinander verbunden, beispielsweise verschraubt und/oder verschweißt, sind, so dass eine thermische Ausdehnungsänderung beispielsweise zu einer Verschiebung an den Enden der Welle und/oder des Blendenelements führt. Insbesondere bei unterschiedlich starken thermischen Ausdehnungsänderungen kann dann an diesen Enden der Welle und/oder des Blendenelements eine Verbindung derselben mittels einer oder mehrerer Längenausgleichselemente, beispielsweise Verschraubungen mit Langlöchern, vorgesehen sein.

Das Blendenelement ist vorzugsweise an einer bezüglich der Schwerkraftrichtung oberen Seite der Verbindungsöffnung angeordnet, beispielsweise an einer Deckenwandung der Trennvorrichtung.

Zum zumindest abschnittsweisen Abdecken oder Verschließen der Verbindungsöffnung ist das Blendenelement vorzugsweise von oben in die Verbindungsöffnung einbringbar, insbesondere einschwenkbar.

Alternativ oder ergänzend hierzu kann vorgesehen sein, dass das Blendenelement oder ein weiteres Blendenelement von unten in die Verbindungsöffnung einbringbar, insbesondere einschwenkbar ist.

Eine Schwenkrichtung des Blendenelements ist vorzugsweise so gewählt, dass das Blendenelement beim Bewegen desselben aus der Offenstellung in die Schließstellung in Richtung desjenigen Raumes bewegt wird, in welchem eine höhere und damit stärker zu schützende Luftqualität vorherrscht.

Vorteilhaft kann es sein, wenn mittels des Blendenelements ein freier Querschnitt oder Öffnungsquerschnitt der Verbindungsöffnung temporär reduzierbar ist, insbesondere auf höchstens ungefähr 70 %, vorzugsweise auf höchstens ungefähr 50 %, beispielsweise auf höchstens ungefähr 30 %, eines Öffnungsquerschnitts in der Offenstellung des Blendenelements.

Ferner kann es vorteilhaft sein, wenn mittels des Blendenelements ein in der Offenstellung des Blendenelements freier Querschnitt oder Öffnungsquerschnitt der Verbindungsöffnung temporär vollständig verschließbar oder fast vollständig verschließbar ist, insbesondere auf höchstens ungefähr 20 %, vorzugsweise auf höchstens ungefähr 10 %, beispielsweise auf höchstens ungefähr 5 %, eines Öffnungsquerschnitts in der Offenstellung des Blendenelements reduzierbar ist.

Das Blendenelement kann insbesondere einteilig oder mehrteilig ausgebildet sein. Insbesondere können ein einziges oder mehrere plattenförmige oder plattenartige Blendenelementabschnitt vorgesehen sein, welche relativ zu einer oder mehreren Wänden und/oder relativ zu einander beweglich, insbesondere schwenkbar, sind. Hierdurch kann insbesondere ein zur Betätigung des Blendenelements freizuhaltender Schwenkbereich des Blendenelements minimiert werden.

Die vorstehend beschriebene Trennvorrichtung eignet sich insbesondere zur Verwendung in einer Behandlungsanlage.

Die Erfindung befasst sich somit auch mit einer Behandlungsanlage zur Behandlung von Werkstücken, beispielsweise einer Lackieranlage zum Lackieren von Werkstücken. Eine solche Lackieranlage umfasst insbesondere einen Trockner, welcher im Sinne eines energieeffizienten Betriebs besonders vor unerwünschten Luftströmungen geschützt werden sollte.

Die erfindungsgemäße Behandlungsanlage umfasst vorzugsweise eine Trennvorrichtung, welche insbesondere zur Minimierung eines Fluidaustauschs zwischen einem Behandlungsraum der Behandlungsanlage einerseits und mindestens einem weiteren Raum andererseits dient.

Die Trennvorrichtung kann insbesondere an einem Einlass des Behandlungsraums oder aber an einem Auslass des Behandlungsraums vorgesehen sein. Ferner können mehrere Trennvorrichtungen, beispielsweise am Einlass, am Auslass und/oder innerhalb des Behandlungsraums, vorgesehen sein.

Der weitere Raum kann beispielsweise ein Abkühlraum sein, welcher sich an einen als Trocknungsraum ausgebildeten Behandlungsraum der Behandlungsanlage anschließt.

Die Behandlungsanlage umfasst vorzugsweise ferner ein Fördersystem zum Fördern von Werkstücken. Das Blendenelement ragt vorzugsweise in einer Schließstellung desselben in einen Bewegungspfad der Werkstücke hinein.

Der Bewegungspfad ist dabei insbesondere derjenige Raumbereich, welcher bei der Förderung der Werkstücke mittels des Fördersystems von den Werkstücken überstrichen wird.

Mittels des Fördersystems sind die Werkstücke insbesondere aus einem Raum in den Behandlungsraum hinein, durch den Behandlungsraum hindurch und aus dem Behandlungsraum heraus bis in einen weiteren Raum hinein förderbar.

Vorteilhaft kann es sein, wenn die Behandlungsanlage eine Steuervorrichtung und/oder eine Sensorvorrichtung umfasst, mittels welcher ein sich dem Übergangsbereich zwischen den zwei benachbarten Räumen näherndes oder ein bereits vor oder in dem Übergangsbereich angeordnetes Werkstück ermittelbar ist. Mittels der Steuervorrichtung und/oder der Sensorvorrichtung ist dann insbesondere das Blendenelement aus einer Schließstellung in eine Offenstellung bringbar. Dadurch ist vorzugsweise ein Bewegungspfad des Werkstücks im Bereich der Verbindungsöffnung freigebbar.

Bei einer weiteren Ausgestaltung kann vorgesehen sein, dass das Fördersystem eine Beschleunigungsvorrichtung umfasst, mittels welcher ein Werkstück im Vergleich zu einer Fördergeschwindigkeit und/oder Taktzeit im Behandlungsraum mit einer erhöhten Geschwindigkeit und/oder mit einer reduzierten Taktzeit durch die Verbindungsöffnung hindurchförderbar ist.

Das Blendenelement ist dann im Vergleich zur Förderung der Werkstücke ohne eine solche Beschleunigungsvorrichtung nur eine kürzere Zeit lang geöffnet, wodurch der Fluidaustausch zwischen den benachbarten Räumen, insbesondere der Luftaustausch zwischen den benachbarten Räumen, weiter minimiert werden kann.

Ein weiterer Erfindungsaspekt betrifft ein Fördersystem zum Fördern von Gegenständen, insbesondere Fahrzeugkarosserien.

Fördersysteme im Allgemeinen sind bekannt, beispielsweise aus der EP 0 678 463 B1.

Das Fördersystem umfasst Folgendes:
eine erste Fördervorrichtung zum Fördern der Gegenstände mit einer ersten Geschwindigkeit und/oder mit einer ersten Taktzeit; und
eine zweite Fördervorrichtung, mittels welcher die Gegenstände mit einer zweiten Geschwindigkeit und/oder mit einer zweiten Taktzeit förderbar sind,
wobei die zweite Geschwindigkeit vorzugsweise höher ist als die erste Geschwindigkeit und/oder wobei die zweite Taktzeit vorzugsweise kürzer ist als die erste Taktzeit.

Die Gegenstände sind mittels der zweiten Fördervorrichtung von der ersten Fördervorrichtung übernehmbar und/oder an die erste Fördervorrichtung übergebbar.

Günstig kann es sein, wenn die zweite Fördervorrichtung eine Hubvorrichtung umfasst, mittels welcher die Gegenstände von der ersten Fördervorrichtung abhebbar und dabei mittels der zweiten Fördervorrichtung aufnehmbar sind.

Die zweite Fördervorrichtung umfasst insbesondere eine Hubvorrichtung, mittels welcher die Gegenstände auf die erste Fördervorrichtung oder auf eine dritte Fördervorrichtung absenkbar und dabei an die erste Fördervorrichtung oder die dritte Fördervorrichtung übergebbar sind.

Bei dem Fördersystem ist insbesondere vorgesehen, dass mittels der zweiten Fördervorrichtung die Gegenstände von der ersten Fördervorrichtung abhebbar, dann im Vergleich zur Förderung mittels der ersten Fördervorrichtung beschleunigt oder schneller förderbar sind und schließlich mittels der zweiten Fördervorrichtung auf die erste Fördervorrichtung oder eine dritte Fördervorrichtung absetzbar sind.

Es kann vorgesehen sein, dass mittels der Hubvorrichtung Förderelemente der zweiten Fördervorrichtung anhebbar und dabei insbesondere formschlüssig mit den Gegenständen in Eingriff bringbar sind.

Alternativ oder ergänzend hierzu kann vorgesehen sein, dass mittels der Hubvorrichtung Förderelemente der zweiten Fördervorrichtung absenkbar und dabei mit den Gegenständen außer Eingriff bringbar sind.

Die Förderelemente ermöglichen insbesondere eine formschlüssige Aufnahme der Gegenstände bezüglich einer Förderrichtung, so dass insbesondere eine exakte Positionierung der Gegenstände bei der Aufnahme und/oder der Abgabe derselben mittels der zweiten Fördervorrichtung längs der Förderrichtung gewährleistet ist.

Die Förderelemente greifen vorzugsweise an den Werkstücken direkt oder an Werkstückaufnahmen zur Aufnahme der Werkstücke, beispielsweise an Skidkufen eines Skids, an.

Günstig kann es sein, wenn die Förderelemente Laufwagen sind, welche insbesondere mittels einer oder mehrerer Ketten antreibbar sind.

Günstig kann es sein, wenn die zweite Fördervorrichtung sich nur längs eines Abschnitts einer Förderstrecke der ersten Fördervorrichtung erstreckt.

Die erste Fördervorrichtung erstreckt sich vorzugsweise beidseitig über die Enden der zweiten Fördervorrichtung hinaus.

Die erste Fördervorrichtung und die zweite Fördervorrichtung umfassen vorzugsweise voneinander verschiedene Förderelemente, welche insbesondere an voneinander verschiedenen Angriffspunkten an den Werkstücken und/oder Werkstückaufnahmen zur Aufnahme der Werkstücke angreifen.

Insbesondere sind die erste Fördervorrichtung und die zweite Fördervorrichtung einander überlappend angeordnet.

Beispielsweise kann vorgesehen sein, dass die zweite Fördervorrichtung innerhalb oder außerhalb der ersten Fördervorrichtung bezogen auf eine horizontale Querrichtung, welche senkrecht zur Förderrichtung ausgerichtet ist, angeordnet sind.

Bei einer Ausgestaltung des Fördersystems kann vorgesehen sein, dass die erste Fördervorrichtung ein Taktförderer ist, mit welchem die Gegenstände innerhalb einer vorgegebenen Taktzeit jeweils von einer Halteposition zu einer längs einer Förderstrecke darauffolgenden weiteren Halteposition förderbar sind.

Bei Erreichen einer vorgegebenen Halteposition innerhalb eines Takts der ersten Fördervorrichtung und/oder während einer Verweilzeit der Gegenstände an der jeweiligen Halteposition sind die Gegenstände vorzugsweise mittels der zweiten Fördervorrichtung von der vorgegebenen Halteposition aufnehmbar und an eine andere Halteposition bringbar.

Mittels der zweiten Fördervorrichtung sind somit vorzugsweise einzelne oder mehrere Haltepositionen der ersten Fördervorrichtung überspringbar.

Die erste Fördervorrichtung ist vorzugsweise ein Kettenförderer.

Alternativ oder ergänzend hierzu kann vorgesehen sein, dass die zweite Fördervorrichtung ein Kettenförderer ist.

Günstig kann es sein, wenn die erste Fördervorrichtung ein Kettenförderer mit mindestens zwei separaten Ketten ist. Die Ketten sind insbesondere längs der Förderrichtung aufeinanderfolgend angeordnet und decken damit unterschiedliche Teilstrecken einer Gesamtförderstrecke ab.

Vorteilhaft kann es sein, wenn die Ketten miteinander synchronisiert sind, so dass insbesondere bei einer Taktförderung über die gesamte erste Fördervorrichtung hinweg ein einheitlicher Takt sowie einheitliche Verweildauern an den einzelnen Haltepositionen einstellbar sind.

Die längs der Förderrichtung hintereinander angeordneten Ketten der ersten Fördervorrichtung sind insbesondere in voneinander verschiedenen Räumen einer Behandlungsanlage angeordnet. Insbesondere kann hierdurch im Vergleich zur Verwendung einer einzelnen Kette ein sich andauernd wiederholendes Erhitzen und Abkühlen der Kette in unterschiedlichen Räumen vermieden werden.

Die in der Förderrichtung aufeinanderfolgenden Ketten der ersten Fördervorrichtung grenzen an ihren einander zugewandten Enden insbesondere an eine Trennvorrichtung und/oder eine zweite Fördervorrichtung an.

Günstig kann es sein, wenn mittels der ersten Kette die Gegenstände bis zur zweiten Fördervorrichtung förderbar sind. Mittels der zweiten Fördervorrichtung sind die Gegenstände dann vorzugsweise zur zweiten Kette der ersten Fördervorrichtung förderbar. Mittels dieser zweiten Kette sind die Gegenstände dann vorzugsweise von der zweiten Fördervorrichtung weg förderbar.

Abhängig von der Ausgestaltung der ersten Fördervorrichtung können auch mehr als zwei in der Förderrichtung aufeinanderfolgende Ketten vorgesehen sein.

Alternativ oder ergänzend hierzu können auch mehrere Paare von Ketten längs der Förderrichtung aufeinanderfolgend angeordnet sein.

Das Fördersystem eignet sich insbesondere zur Verwendung in einer Behandlungsanlage zur Behandlung von Werkstücken. Die vorliegende Erfindung betrifft daher auch eine solche Behandlungsanlage.

Die erfindungsgemäße Behandlungsanlage umfasst ein Fördersystem. Mittels der ersten Fördervorrichtung sind Werkstücke durch einen Behandlungsraum der Behandlungsanlage hindurchförderbar. Mittels der zweiten Fördervorrichtung sind die Werkstücke durch einen Übergangsbereich zwischen dem Behandlungsraum und einem weiteren Raum hindurchförderbar.

Dies kann insbesondere an einem Eingang des Behandlungsraums und/oder an einem Ausgang des Behandlungsraums sein.

Vorteilhaft kann es sein, wenn der Übergangsbereich ein Schleusenbereich zur Minimierung eines Luftaustauschs zwischen dem Behandlungsraum und dem weiteren Raum ist. Der Übergangsbereich erstreckt sich vorzugsweise so weit längs einer Förderstrecke des Fördersystems, dass der Übergangsbereich mindestens eine Halteposition der ersten Fördervorrichtung umfasst oder zumindest mindestens eine solche Halteposition umfassen würde, wenn man eine Reihe von Haltepositionen der ersten Fördervorrichtung bis in den Übergangsbereich hinein verlängern würde.

Die zweite Fördervorrichtung umfasst vorzugsweise eine Aufnahmestation zur Aufnahme der Werkstücke und/oder eine Abgabestation zur Abgabe der Werkstücke.

Die Aufnahmestation ist beispielsweise im Behandlungsraum oder im Übergangsbereich oder in einem weiteren Raum angeordnet.

Die Abgabestation ist vorzugsweise im weiteren Raum oder im Behandlungsraum angeordnet.

Der Behandlungsraum ist beispielsweise ein Trocknungsraum, in welchem die Werkstücke insbesondere zur Lacktrocknung erhitzt werden.

Der weitere Raum ist beispielsweise ein sich an den Trocknungsraum anschließender Kühlraum.

Erfindungsgemäß wird vorgesehen, dass die Behandlungsanlage ein Blendenelement umfasst, welches zur temporären Verkleinerung einer Verbindungsöffnung zwischen dem Behandlungsraum und dem weiteren Raum in einen Bewegungspfad der Werkstücke im Übergangsbereich einbringbar ist.

Mittels einer Steuervorrichtung der Behandlungsanlage sind das Blendenelement und die zweite Fördervorrichtung derart steuerbar, dass das Blendenelement aus dem Bewegungspfad herausbewegt wird, wenn ein Werkstück mittels der zweiten Fördervorrichtung in den Übergangsbereich eingebracht und/oder durch den Übergangsbereich hindurchgefördert und/oder aus dem Übergangsbereich heraus bewegt wird.

Beschrieben ist ferner ein Verfahren (nicht Teil der Erfindung) zum Fördern von Gegenständen, insbesondere Werkstücken.

Das Verfahren umfasst vorzugsweise Folgendes:
Fördern der Gegenstände mittels einer ersten Fördervorrichtung mit einer ersten Geschwindigkeit und/oder mit einer ersten Taktzeit;
Fördern der Gegenstände mittels einer zweiten Fördervorrichtung mit einer zweiten Geschwindigkeit und/oder mit einer zweiten Taktzeit, wobei die zweite Geschwindigkeit vorzugsweise höher ist als die erste Geschwindigkeit und/oder wobei die zweite Taktzeit vorzugsweise kürzer ist als die erste Taktzeit.

Die Gegenstände werden vorzugsweise mittels der zweiten Fördervorrichtung von der ersten Fördervorrichtung übernommen und/oder an die erste Fördervorrichtung übergeben.

Das Verfahren weist vorzugsweise einzelne oder mehrere der im Zusammenhang mit dem Fördersystem beschriebenen Merkmale und/oder Vorteile auf.

Günstig kann es sein, wenn mittels der zweiten Fördervorrichtung eine oder mehrere Haltepositionen, in welchen die Gegenstände bei der Förderung mittels der ersten Fördervorrichtung temporär verweilen oder verweilen würden, übersprungen werden.

Insbesondere werden die Gegenstände mittels der zweiten Fördervorrichtung in einen Übergangsbereich zwischen benachbarten Räumen eingebracht und/oder durch den Übergangsbereich hindurchgefördert und/oder aus dem Übergangsbereich heraus bewegt. Dabei und/oder hierzu wird vorzugsweise ein bewegliches Blendenelement einer im Übergangsbereich angeordneten Trennvorrichtung geöffnet. Zudem wird dabei und/oder hierzu vorzugsweise ein Bewegungspfad der Gegenstände freigegeben.

Der Übergangsbereich ist insbesondere ein Schleusenbereich.

Vorzugsweise ist der Übergangsbereich kein Bereich, in welchem die Gegenstände zwischen zwei Fördertakten verweilen. Vielmehr ist der Übergangsbereich vorzugsweise ein Abschnitt, durch welchen die Gegenstände, insbesondere die Werkstücke beschleunigt hindurchgefördert werden.

Die Gegenstände, insbesondere die Werkstücke, beispielsweise die Fahrzeugkarosserien werden insbesondere in einer Querfahrweise durch den Übergangsbereich und/oder durch die Verbindungsöffnung hindurchgefördert.

Bei dieser Querfahrweise ist eine Längsachse der Gegenstände, insbesondere der Werkstücke, beispielsweise der Fahrzeugkarosserien, quer, vorzugsweise senkrecht, zur Förderrichtung ausgerichtet. Zudem ist die Längsachse vorzugsweise im Wesentlichen horizontal ausgerichtet.

Zur Aufnahme und Förderung der Gegenstände mittels der zweiten Fördervorrichtung umfasst diese insbesondere zwei oder vier Förderelemente, beispielsweise Laufwagen.

Bei der Verwendung von vier Laufwagen sind diese insbesondere so dimensioniert und so angeordnet, dass sie beispielsweise an einer Werkstückaufnahme, insbesondere an einem Skid, an vier Eckbereichen, insbesondere an beiden Endbereichen beider Skidkufen des Skids, angreifen können.

Bei der Verwendung von zwei Laufwagen sind diese vorzugsweise so dimensioniert, dass jeder Laufwagen jeweils beide Skidkufen erfasst, wobei ein Laufwagen insbesondere an einem bezüglich der Längsachse der Werkstücke, insbesondere der Fahrzeugkarosserien, vorderen Bereich der Skidkufen angreift und wobei ein weiterer Laufwagen insbesondere an einem bezüglich der Längsachse der Werkstücke, insbesondere der Fahrzeugkarosserien, hinteren Bereich der Skidkufen angreift.

Zur korrekten Lokalisierung und Positionierung der Werkstücke relativ zu Förderelementen der ersten Fördervorrichtung und/oder relativ zu Förderelementen der zweiten Fördervorrichtung sind insbesondere ein oder mehrere Sensorelemente vorgesehen. Als Sensorelemente können insbesondere mechanische oder induktive Sensoren, beispielsweise Initiatoren, vorgesehen sein.

Alternativ oder ergänzend hierzu können feste Anschläge und/oder Lichtschranken und/oder sonstige Kontakte an einer oder mehreren Endpositionen der zweiten Fördervorrichtung vorgesehen sein, um die Gegenstände, insbesondere die Werkstücke, beispielsweise an einer Aufnahmestation und/oder einer Abgabestation korrekt zu positionieren, insbesondere relativ zu Förderelementen der ersten Fördervorrichtung.

Zur korrekten Positionierung und/oder Überwachung der Position der Gegenstände, insbesondere der Werkstücke, kann ferner ein Inkrementalgeber vorgesehen sein.

Alternativ oder ergänzend können zudem ein oder mehrere an einer Fördervorrichtung, beispielsweise der ersten Fördervorrichtung oder der zweiten Fördervorrichtung, mitfahrende Initiatoren vorgesehen sein. Mittels derartiger Initiatoren kann insbesondere ein Gegenstand, insbesondere ein Werkstück oder eine Werkstückaufnahme, in einem vorgegebenen Positionierbereich aufgefunden, insbesondere geortet, werden. Dies ermöglicht dann insbesondere eine einfache Korrektur der Positionierung der Gegenstände relativ zu einer Fördervorrichtung und/oder eine Korrektur der Positionierung der Fördervorrichtung relativ zu den Gegenständen.

Zudem können alternativ oder ergänzend ein oder mehrere Positionssensoren, insbesondere Höhensensoren, zur Überwachung der Aufnahme, Abgabe und/oder Übergabe von Werkstücken vorgesehen sein. Ein oder mehrere Positionssensoren erfassen dabei insbesondere ein Anheben und/oder Absenken des jeweiligen Werkstücks von einer Fördervorrichtung, beispielsweise einem Kettenförderer, beziehungsweise auf eine Fördervorrichtung, beispielsweise einen Kettenförderer.

Günstig kann es sein, wenn der eine oder mehreren Positionssensoren mechanisch betätigbar sind, insbesondere durch Aufsetzen eines Werkstücks und/oder einer Werkstückaufnahme auf den einen oder die mehreren Positionssensoren.

Der eine oder die mehreren Positionssensoren sind insbesondere in einem Aufnahmebereich, in einem Abgabebereich und/oder in einem Übergabebereich angeordnet und werden vorzugsweise unmittelbar durch das Werkstück und/oder unmittelbar durch die Werkstückaufnahme betätigt, wenn das Werkstück und/oder die Werkstückaufnahme angehoben oder abgesenkt wird.

Insbesondere sind mehrere Positionssensoren vorgesehen, welche ein Anheben und/oder Absenken eines Werkstücks und/oder einer Werkstückaufnahme an unterschiedlichen Punkten des Werkstücks und/oder der Werkstückaufnahme erfassen.

Beispielsweise können zwei oder mehr als zwei Positionssensoren zu beiden Seiten einer Fördervorrichtung und/oder längs einer Förderrichtung der Fördervorrichtung vorgesehen sein, um eine von einer vorgegebenen Sollausrichtung, insbesondere von der horizontalen Ausrichtung, abweichende Ausrichtung des Werkstücks und/oder der Werkstückaufnahme zu erfassen.

Günstig kann es sein, wenn ein oder mehrere Positionssensoren jeweils ein oder mehrere Betätigungselemente, beispielsweise Betätigungsbügel, aufweisen. Mittels eines solchen Betätigungselements kann der jeweilige Positionssensor insbesondere über einen großen Raumbereich hinweg betätigt werden. Beispielsweise wird mittels eines Betätigungselements eine gleichzeitige Betätigung durch unterschiedliche Stellen und/oder Bestandteile des Werkstücks und/oder der Werkstückaufnahme möglich.

Beispielsweise können ein oder mehrere als Betätigungsbügel ausgebildete Betätigungselemente vorgesehen sein, welche beispielsweise bei einer Querförderung von auf Skids geförderten Werkstücken jeweils von beiden Skidkufen des Skids betätigbar sind. Optional kann dann zugleich ermittelt werden, ob beide Skidkufen den Betätigungsbügel gleichmäßig betätigen, woraus auf eine korrekte Ausrichtung des Werkstücks relativ zur Fördervorrichtung schließbar sein kann.

Vorzugsweise kann von einer mittels einer oder mehrerer Positionssensoren ermittelten Position, Höhe und/oder Ausrichtung des Werkstücks und/oder der Werkstückaufnahme auf eine korrekte Anordnung an der Fördervorrichtung, beispielsweise auf einem Kettenförderer, insbesondere auf Trolleys eines Kettenförderers, geschlossen werden.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Trennvorrichtung und eines Fördersystems einer Behandlungsanlage, wobei ein Blendenelement einer Trennvorrichtung in einer Offenstellung angeordnet ist;
- Fig. 2: eine der Fig. 1 entsprechende schematische Darstellung der Behandlungsanlage aus Fig. 1, wobei das Blendenelement in einer Schließstellung angeordnet ist;
- Fig. 3: einen schematischen vertikalen Längsschnitt durch die Behandlungsanlage aus Fig. 1;
- Fig. 4: einen der Fig. 3 entsprechenden schematischen Längsschnitt durch die Behandlungsanlage gemäß Fig. 2, wobei zusätzlich ein in der Behandlungsanlage zu behandelndes Werkstück dargestellt ist;
- Fig. 5: eine vergrößerte Darstellung des Bereichs V in Fig. 3;
- Fig. 6: eine vergrößerte Darstellung des Bereichs VI in Fig. 4;
- Fig. 7: eine vergrößerte Darstellung des Bereichs VII in Fig. 6;
- Fig. 8: eine schematische perspektivische Darstellung des Fördersystems aus Fig. 1;
- Fig. 9: eine schematische Seitenansicht des Fördersystems aus Fig. 8;
- Fig. 10: eine vergrößerte Darstellung des Bereichs X in Fig. 9;
- Fig. 11: eine schematische Draufsicht auf das Fördersystem aus Fig. 8;
- Fig. 12: einen schematischen vertikalen Schnitt durch das Fördersystem aus Fig. 8 längs der Linie 12-12 in Fig. 11;
- Fig. 13: einen schematischen vertikalen Schnitt durch das Fördersystem aus Fig. 8 längs der Linie 13-13 in Fig. 11; und
- Fig. 14: einen schematischen vertikalen Schnitt durch das Fördersystem aus Fig. 8 längs der Linie 14-14 in Fig. 11.

Gleiche oder funktional äquivalente Elemente sind in sämtlichen Figuren mit denselben Bezugszeichen versehen.

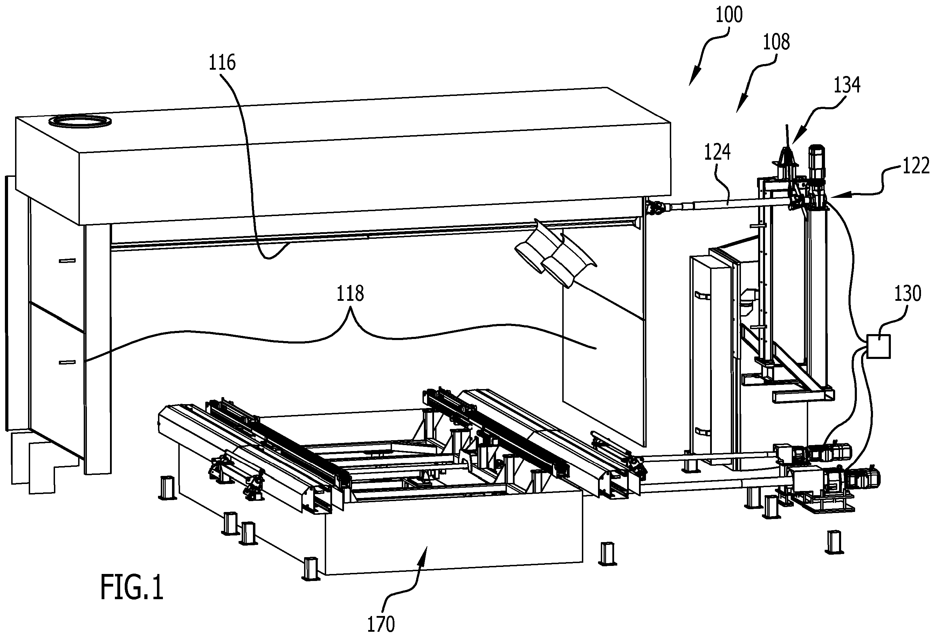

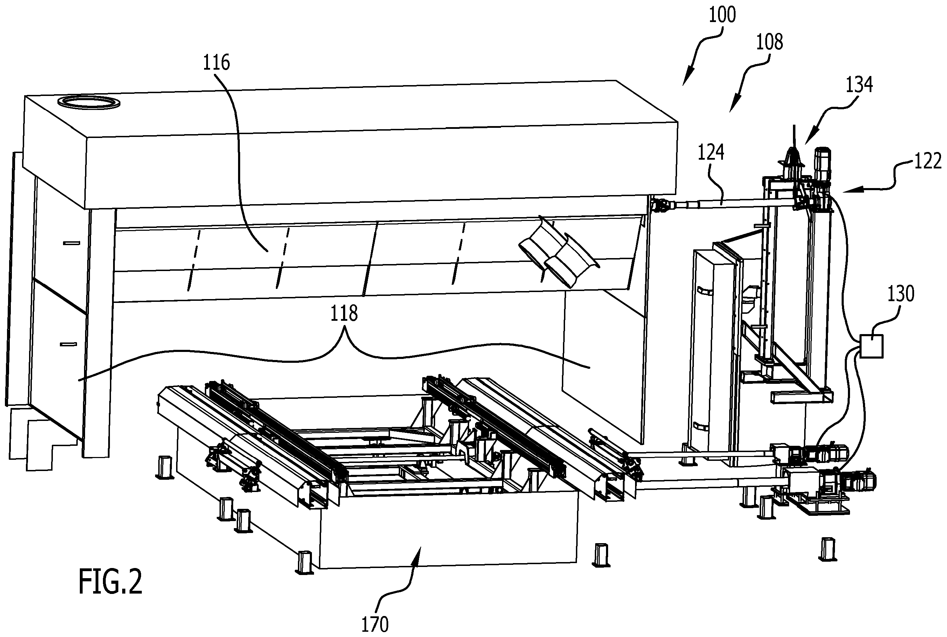

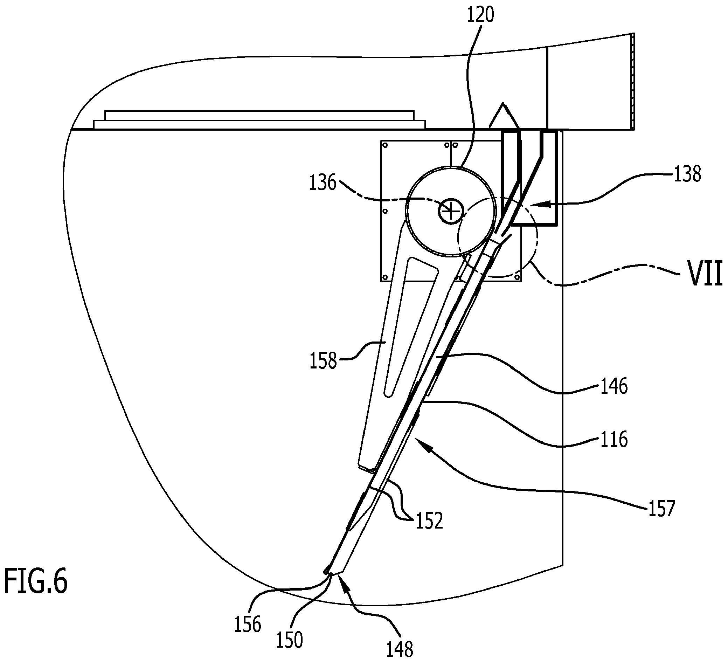

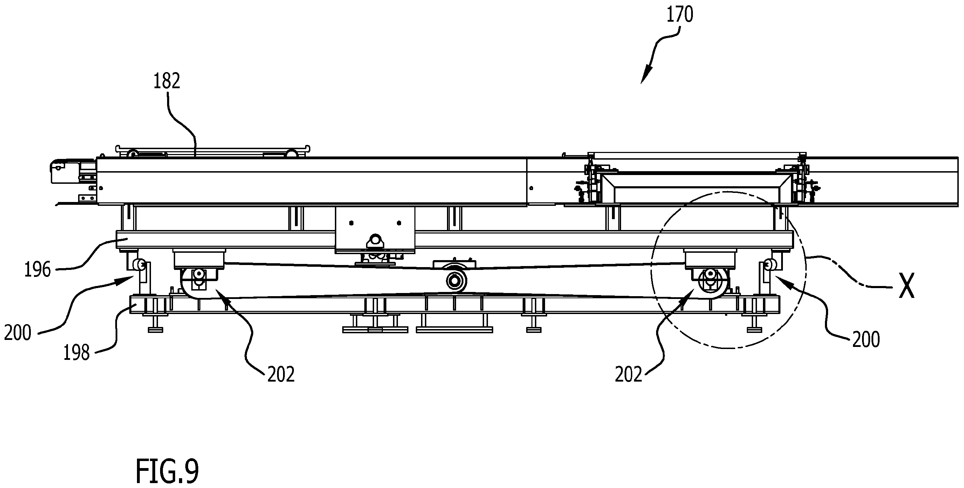

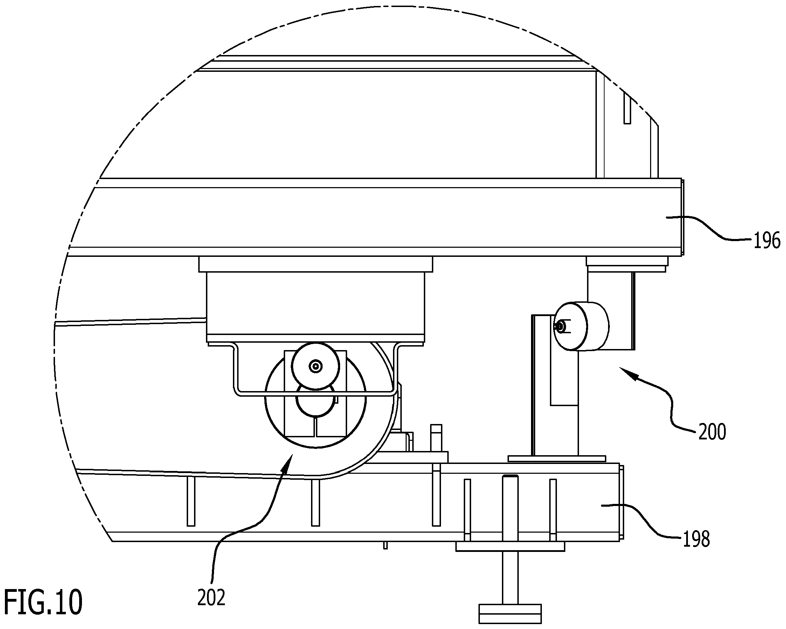

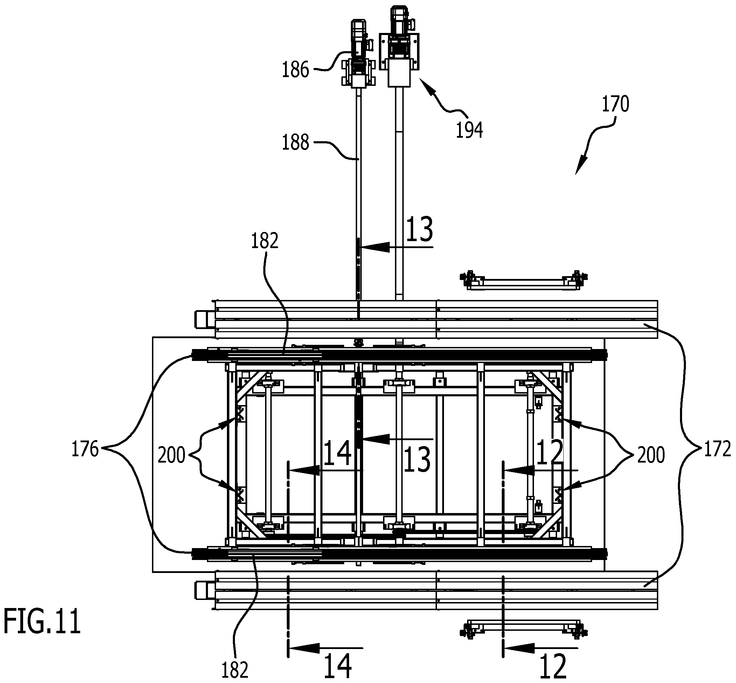

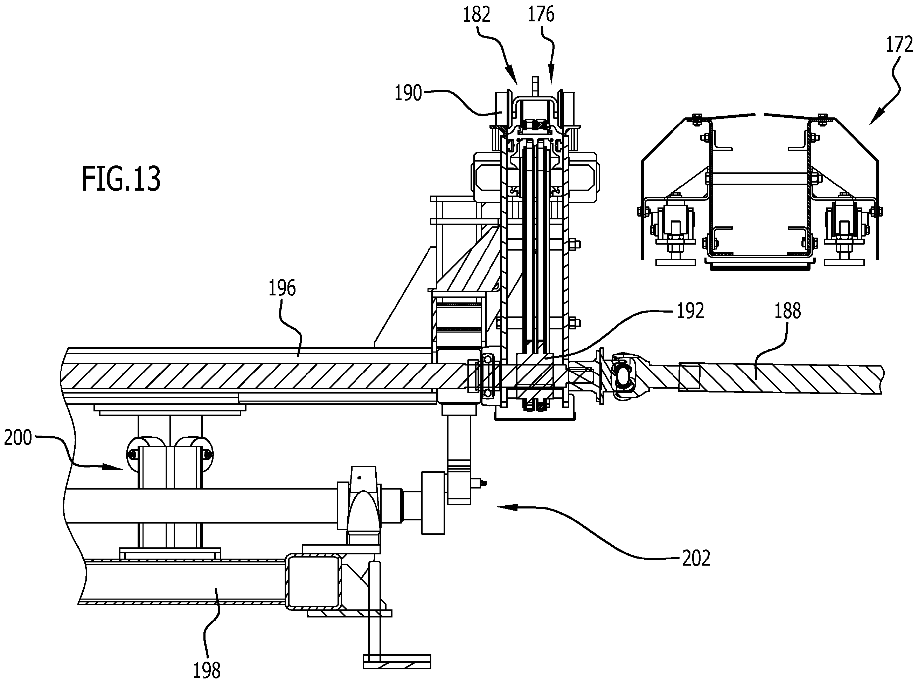

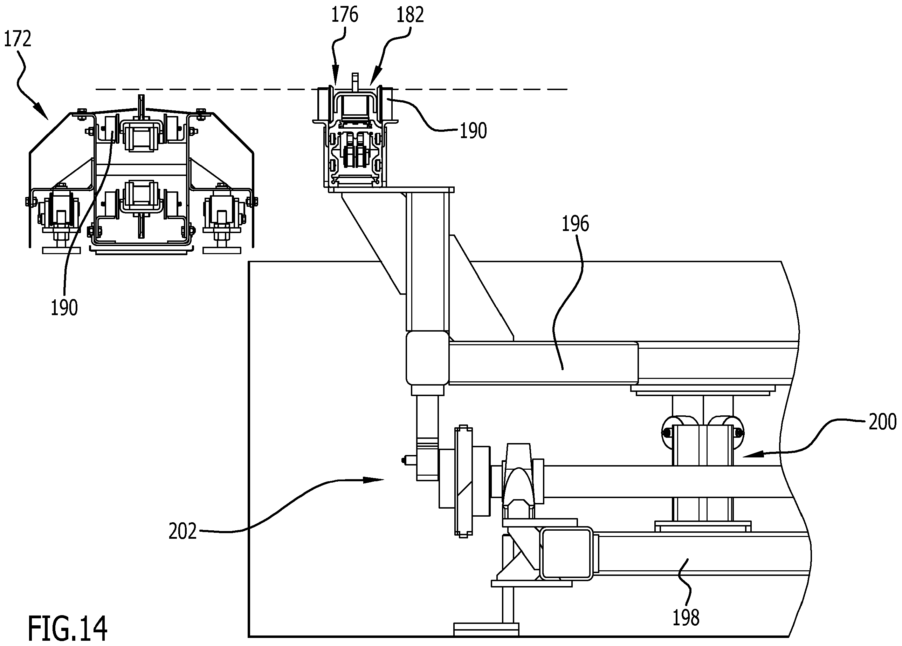

Eine in den Fig. 1 bis 14 dargestellte Ausführungsform einer als Ganzes mit 100 bezeichneten Behandlungsanlage ist beispielsweise eine Lackieranlage zum Lackieren von Werkstücken 102, welche beispielsweise verschiedene Behandlungsräume 104 zum Lackieren, Trocknen, Abkühlen, etc. der Werkstücke 102 umfasst.

Im Sinne einer effizienten Energienutzung sind zwischen verschiedenen Räumen 106, insbesondere den Behandlungsräumen 104, Trennvorrichtungen 108 der Behandlungsanlage 100 angeordnet.

Eine solche Trennvorrichtung 108 ist beispielsweise eine Luftschleiervorrichtung und auch unter der Bezeichnung "Luftschleuse" bekannt.

Die Trennvorrichtung 108 dient insbesondere dazu, einen Luftaustausch zwischen aneinander angrenzenden Räumen 106 in einem Übergangsbereich 110 zwischen diesen Räumen 106 zu minimieren.

Die Trennvorrichtung 108 dient zugleich jedoch als Verbindungsöffnung 112, mittels welcher Werkstücke 102 von einem Raum 106 in den anderen Raum 106 gelangen können.

Beispielsweise aus der DE 10 2010 043 087 A1 ist eine Behandlungsanlage bekannt, bei welcher ein Luftvorhang zur Minimierung eines Luftaustausches zwischen zwei Räumen erzeugt wird.

Insbesondere dann, wenn die Werkstücke 102 Fahrzeugkarosserien sind und als solche eine große Querschnittsfläche bei der Förderung derselben aufweisen, sind zusätzliche Maßnahmen zur Minimierung des Luftaustauschs wünschenswert.

Insbesondere dann, wenn als Fahrzeugkarosserien ausgebildete Werkstücke 102 in der sogenannten Querfahrweise, das heißt mit der jeweiligen Fahrzeuglängsachse senkrecht zu einer Förderrichtung 114, durch die Behandlungsanlage 100 gefördert werden, ergibt sich ein noch größerer Querschnitt und somit eine erhöhte Gefahr eines unerwünscht großen Luftaustauschs zwischen den Räumen 106.

Wie insbesondere den Fig. 1 bis 7 zu entnehmen ist, umfasst die Trennvorrichtung 108 der dargestellten Behandlungsanlage 100 daher ein Blendenelement 116, welches zur Verkleinerung eines Querschnitts der Verbindungsöffnung 112 zwischen den Räumen 106 in die Verbindungsöffnung 112 hineinbewegbar oder aus derselben herausbewegbar ist.

Das Blendenelement 116 ist insbesondere drehbar oder schwenkbar gelagert, beispielsweise an Wänden 118, insbesondere Seitenwänden, der Trennvorrichtung 108. Hierzu erstreckt sich insbesondere eine Welle 120 zwischen den Wänden 118. An dieser Welle 120 ist vorzugsweise das Blendenelement 116 festgelegt.

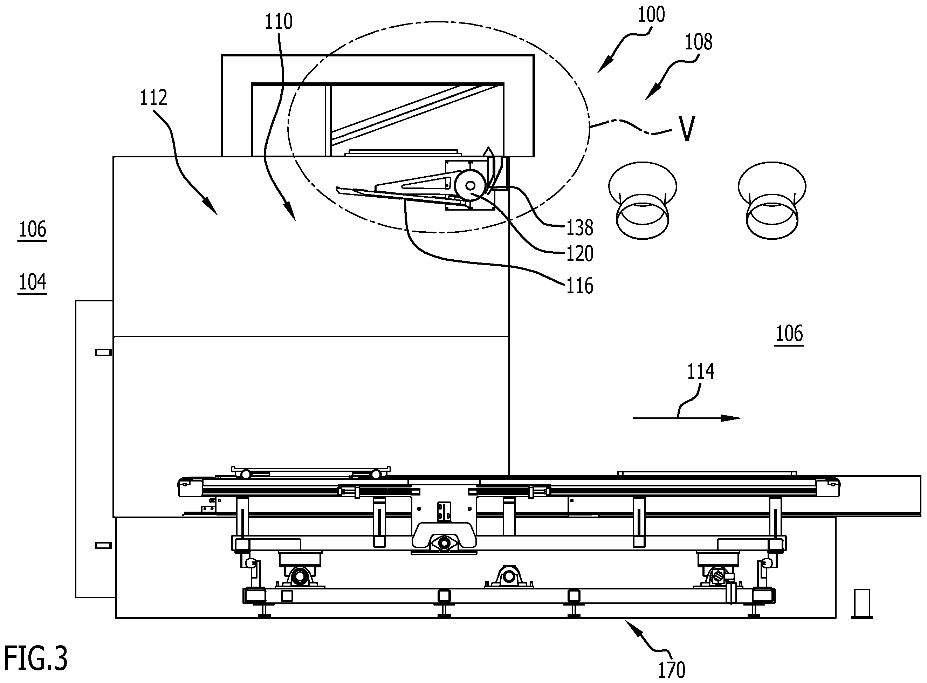

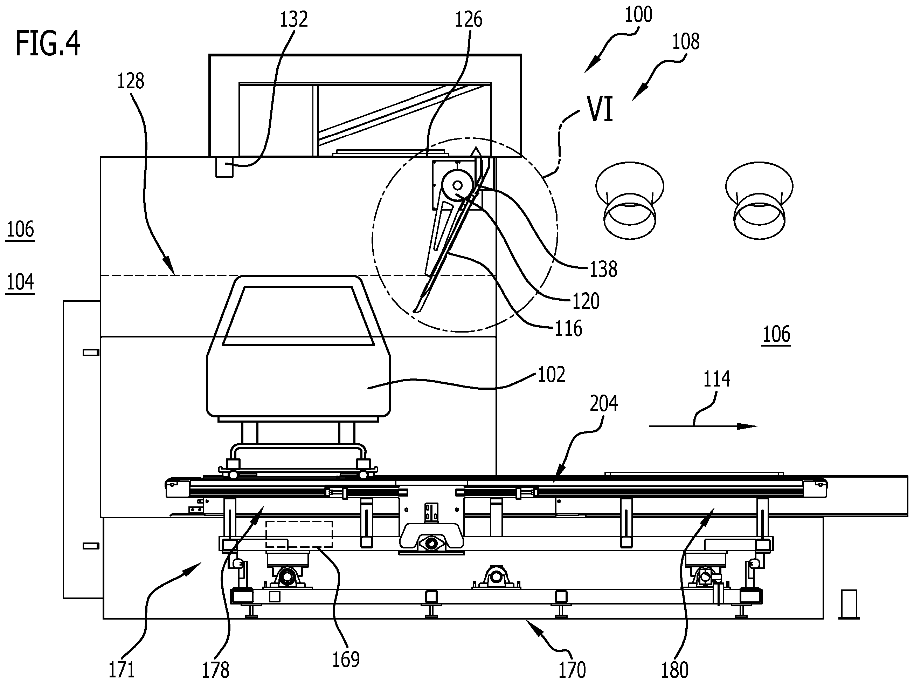

Die Welle 120 ist mit einer Antriebsvorrichtung 122 der Trennvorrichtung 108 gekoppelt, beispielsweise über eine Antriebswelle 124, so dass das Blendenelement 116 durch Rotation der Welle 120 letztlich mittels der Antriebsvorrichtung 122 motorisch, insbesondere automatisch, aus der beispielsweise in Fig. 3 dargestellten Offenstellung in die in Fig. 4 dargestellte Schließstellung und umgekehrt aus der Schließstellung in die Offenstellung bringbar ist.

In der Schließstellung verkleinert das Blendenelement 116 die Verbindungsöffnung 112 im Vergleich zur Offenstellung des Blendenelements 116 vorzugsweise um mindestens ungefähr 30 %, beispielsweise mindestens ungefähr 40 %.

Das Blendenelement 116 ragt dabei insbesondere von einer Deckenwandung 126 nach unten in die Verbindungsöffnung 112.

Je größer das Blendenelement 116 ist, desto effizienter kann mittels des Blendenelements 116 in der Schließstellung desselben ein Luftaustausch zwischen den beiden Räumen 106 reduziert werden.

Allerdings kann sich bei entsprechender Dimensionierung des Blendenelements 116 eine Kollision desselben mit den Werkstücken 102 ergeben, wenn diese durch die Verbindungsöffnung 112 hindurchgefördert werden.

Wie insbesondere Fig. 4 zu entnehmen ist, erstreckt sich auch bei der dargestellten Ausführungsform der Behandlungsanlage 100 das Blendenelement 116 in einen Bewegungspfad 128 der Werkstücke 102 hinein, das heißt, dass das Blendenelement 116 in einen Raumbereich hineinragt, welcher bei der Förderung der Werkstücke 102 durch die Verbindungsöffnung 112 von den Werkstücken 102 überstrichen wird.

Um eine Beschädigung der Werkstücke 102 zu vermeiden, muss das Blendenelement 116 somit aus der Schließstellung (s. Fig. 4) in die Offenstellung (s. Fig. 3) gebracht werden.

Hierfür ist die Antriebsvorrichtung 122 vorgesehen.

Mittels einer Steuervorrichtung 130 ist zudem vorzugsweise steuerbar, dass das Blendenelement 116 nur dann in der Offenstellung angeordnet ist, wenn auch tatsächlich ein Werkstück 102 durch die Verbindungsöffnung 112 hindurchgeführt werden muss. Im übrigen Zeitraum ist das Blendenelement 116 vorzugsweise in der Schließstellung, um den Luftaustausch zwischen den zwei Räumen 106 zu minimieren.

Ferner kann eine Sensorvorrichtung 132 vorgesehen sein, um alternativ oder ergänzend zu der Steuervorrichtung 130 die Antriebsvorrichtung 122 zu aktivieren und beispielsweise bei einer Annäherung eines Werkstücks 102 an das Blendenelement 116 eine automatische Öffnung desselben zu erzielen.

Mittels einer Positioniervorrichtung 134 kann ferner vorzugsweise einem Ausfall oder einer sonstigen Fehlfunktion der Antriebsvorrichtung 122 vorgesorgt werden.

Mittels der Positioniervorrichtung 134, welche insbesondere ein oder mehrere Gegengewichte für das beispielsweise exzentrisch bezüglich seiner Drehachse 136 gelagerte Blendenelement 116 umfasst, kann insbesondere gewährleistet werden, dass das Blendenelement 116 ohne eine Betätigung der Antriebsvorrichtung 122 oder ohne eine sonstige Aktivierung der Antriebsvorrichtung 122 stets in die Offenstellung zurückkehrt.

Zusätzlich zu dem Blendenelement 116 umfasst die Trennvorrichtung 108 vorzugsweise ferner eine Düsenvorrichtung 138.

Die Düsenvorrichtung 138 entspricht hinsichtlich ihrer Funktion im Wesentlichen der Düsenvorrichtung aus der DE 10 2010 043 087 A1, auf welche hiermit Bezug genommen wird und deren Inhalt hiermit zum Gegenstand der vorliegenden Beschreibung gemacht wird.

Die Düsenvorrichtung 138 erzeugt insbesondere einen Luftvorhang im Übergangsbereich 110, um einen Luftaustausch zwischen den Räumen 106 zu minimieren.

Die Düsenvorrichtung 138 umfasst hierzu insbesondere eine schlitzförmige Ausströmöffnung 140, welche beispielsweise von der Deckenwandung 126 nach unten in den Übergangsbereich 110 hineingerichtet ist.

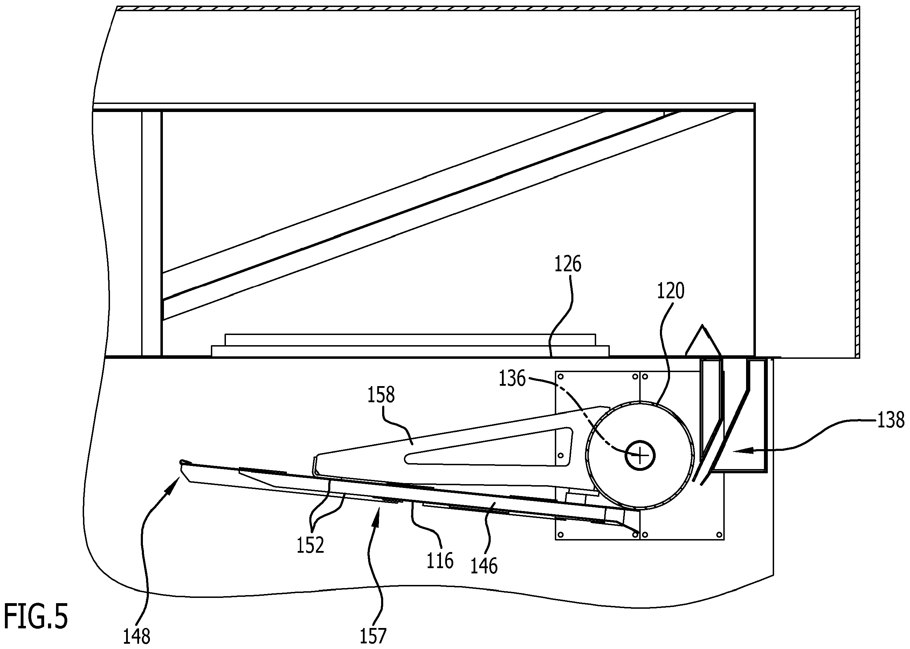

Wie insbesondere Fig. 5 zu entnehmen ist, endet die Düsenvorrichtung 138 in der Offenstellung des Blendenelements 116 im Wesentlichen in den freien Raum, so dass sich eine Strömung im Übergangsbereich 110 ergibt, welche im Wesentlichen der in der DE 10 2010 043 087 A1 beschriebenen Strömung entspricht.

Mittels der Düsenvorrichtung 138 ist dabei insbesondere ein Trennfluidstrom in den Übergangsbereich 110 einbringbar. Dieser Trennfluidstrom ist insbesondere ein Luftstrom.

Eine optimierte fluidwirksame Trennung der beiden Räume 106 voneinander ergibt sich bei der in den Fig. 1 bis 7 dargestellten Ausführungsform der Trennvorrichtung 100 vorzugsweise dadurch, dass die Düsenvorrichtung 128 und das Blendenelement 116 miteinander zusammenwirken.

Das Blendenelement 116 ist hierzu mittels der Welle 120 vorzugsweise unmittelbar neben der Düsenvorrichtung 138, insbesondere unmittelbar neben der Ausströmöffnung 140 der Düsenvorrichtung 138, angeordnet.

Durch Verschwenken des Blendenelements 116, das heißt durch Drehen der Welle 120 samt des daran angeordneten Blendenelements 116 um die Drehachse 136 kann das Blendenelement 116 vorzugsweise direkt an oder in die Nähe der Düsenvorrichtung 138 gebracht werden.

Zur Vermeidung von unerwünschtem Abrieb wird vorzugsweise auch in der Schließstellung des Blendenelements 116 ein Abstand zwischen dem Blendenelement 116 und der Düsenvorrichtung 138 eingehalten, welcher beispielsweise höchstens ungefähr 10 cm, insbesondere höchstens ungefähr 5 cm, beispielsweise höchstens ungefähr 1 cm, beträgt.

Ein der Düsenvorrichtung 138 zugewandtes Ende 142 des Blendenelements 116 weist vorzugsweise eine Einlassöffnung 144 auf.

In der Schließstellung des Blendenelements 116 ist das Blendenelement 116 vorzugsweise derart relativ zu der Düsenvorrichtung 138 positioniert, dass die Ausströmöffnung 140 in die Einlassöffnung 144 hineingerichtet ist, in dieselbe mündet und/oder in dieselbe hineinragt.

Über die Düsenvorrichtung 138 zugeführtes Trennfluid strömt somit in die Einlassöffnung 144 des Blendenelements 116 ein.

Das Blendenelement 116 umfasst vorzugsweise einen Fluidführungsabschnitt 146, welcher insbesondere durch eine insgesamt hohle Ausgestaltung des Blendenelements 116 gebildet ist.

Der an der Einlassöffnung 144 in das Blendenelement 116 einströmende Trennfluidstrom kann somit durch den Fluidführungsabschnitt 146 hindurchströmen und somit von dem der Düsenvorrichtung 138 zugewandten Ende 142 bis zu einem der Düsenvorrichtung 138 abgewandten Ende 148 des Blendenelements 116 gelangen.

An diesem Ende 148, welches der Düsenvorrichtung 138 und somit auch der Einlassöffnung 144 gegenüberliegt, kann der Trennfluidstrom aus dem Blendenelement 116 austreten. Dieses Ende 148 ist hierzu mit einer Auslassöffnung 150 versehen, welche somit der Einlassöffnung 144 gegenüberliegt.

Das Blendenelement 116 ist in der Schließstellung desselben vorzugsweise eine Düsenverlängerung 157 zur Verlängerung der Düsenvorrichtung 138.

Das Blendenelement 116 ist insbesondere im Wesentlichen eben und/oder plattenförmig ausgebildet.

Der Fluidführungsabschnitt 146 ist dabei insbesondere ein Hohlraum zwischen zwei Deckplatten 152 des Blendenelements 116. Die beiden Enden 142, 148 sind insbesondere schlitzförmig ausgebildet, so dass die Einlassöffnung 144 insbesondere als Einlassschlitz 154 ausgebildet ist, während die Auslassöffnung 150 insbesondere als Auslassschlitz 156 ausgebildet ist.

Aufgrund der hohlen Ausgestaltung des Blendenelements 116 sowie aufgrund der im Sinne einer hohen Effizienz möglichst großen Ausmaße sowie aufgrund der möglichst geringen Masse ist das Blendenelement 116 vorzugsweise mittels eines oder mehrerer Versteifungselemente 158 an der Welle 120 festgelegt.

Die beiden Deckplatten 152 können in einer, zwei oder allen drei Raumrichtungen zumindest näherungsweise identische Abmessungen aufweisen. Alternativ hierzu kann es vorgesehen sein, dass eine erste der beiden Deckplatten 152 im Vergleich zu einer zweiten der beiden Deckplatten 152 verkürzt ausgebildet ist, beispielsweise um mindestens ungefähr 10 %, vorzugsweise um mindestens ungefähr 25 %, insbesondere um mindestens ungefähr 40 %, einer maximalen und/oder durchschnittlichen Erstreckung der zweiten Deckplatte 152 längs einer Hauptströmungsrichtung des Trennfluidstroms innerhalb des Blendenelements 116. Beide Deckplatten 152 enden vorzugsweise gemeinsam an dem der Düsenvorrichtung 140 zugewandten Ende 142 des Blendenelements 116 und erstrecken sich ausgehend davon unterschiedlich weit in Richtung des der Düsenvorrichtung 138 abgewandten Endes 148 des Blendenelements 116.

Wenn die kürzere der beiden Deckplatten 152 an einer einem Behandlungsraum 104 abgewandten Außenseite des Blendenelements 116 angeordnet ist, ergibt sich vorzugsweise eine Zumischung von Luft, insbesondere Kaltluft, von außerhalb des Behandlungsraums 104. Eine mittels der Trennvorrichtung 108 erzeugbare Strömungswalze ist dann insbesondere eine Kaltluftwalze.

Alternativ hierzu kann jedoch auch vorgesehen sein, dass die kürzere der beiden Deckplatten 152 an einer einem Behandlungsraum 104 zugewandten Innenseite des Blendenelements 116 angeordnet ist. Es ergibt sich dann vorzugsweise eine Zumischung von Luft, insbesondere Warmluft, von innerhalb des Behandlungsraums 104. Eine mittels der Trennvorrichtung 108 erzeugbare Strömungswalze ist dann insbesondere eine Warmluftwalze.

Die Versteifungselemente 158 sind insbesondere rippenförmig oder strebenförmig ausgebildet.

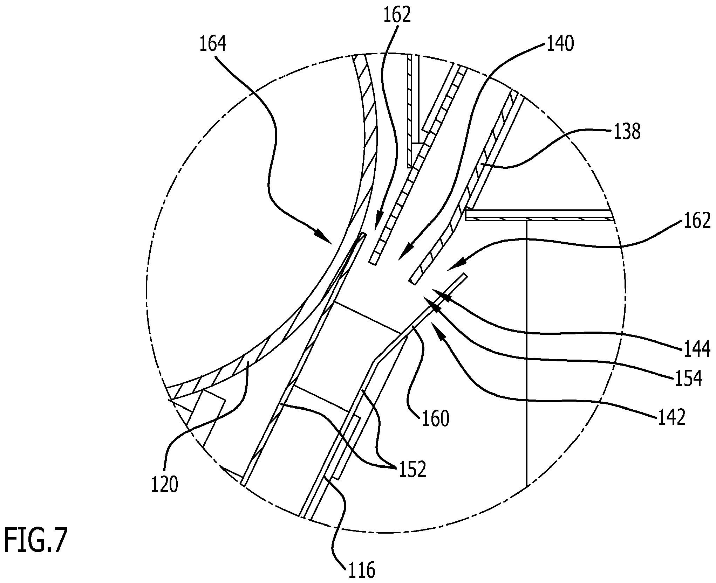

Wie insbesondere Fig. 7 zu entnehmen ist, kann am Übergang zwischen der Düsenvorrichtung 138 und dem Blendenelement 116 zur Strömungsoptimierung eine spezielle Geometrie der Ausströmöffnung 140 sowie der Einlassöffnung 144 vorgesehen sein.

Die Ausströmöffnung 140 ist dabei vorzugsweise zu ihrem Ende hin verjüngend ausgebildet, während die Einlassöffnung 144 vorzugsweise einen trichterförmigen Abschnitt 160 umfasst.

In diesen trichterförmigen Abschnitt 160 mündet vorzugsweise die Düsenvorrichtung 138.

Der trichterförmige Abschnitt 160 kann sich beispielsweise durch eine Krümmung, Biegung, Abkantung oder sonstige Verformung einer oder beider Deckplatten 152 des Blendenelements 116 ergeben.

Bei der in den Fig. 1 bis 7 dargestellten Ausführungsform ist insbesondere lediglich einseitig eine Deckplatte 152 um beispielsweise ungefähr 25° abgeknickt.

Durch den zwischen der Düsenvorrichtung 138 und dem Blendenelement 116 eingehaltenen Abstand ergeben sich zwei Zusatzschlitze 162, durch welche aus der Düsenvorrichtung 138 ausströmendes Trennfluid unter Umgehung des Blendenelements 116 nach außen strömen kann oder durch welche Fluid aus der Umgebung der Düsenvorrichtung 138 und/oder des Blendenelements 116, insbesondere Luft aus den Räumen 106, in das Blendenelement 116 gelangen kann.

Letzteres ergibt sich insbesondere dann, wenn die Ausströmöffnung 140 der Düsenvorrichtung 138 zusammen mit der Einlassöffnung 144 des Blendenelements 116 eine Saugstrahldüse 164 bilden, wodurch sich ein Unterdruck im Bereich der Zusatzschlitze 162 einstellen kann, der dann wiederum zur Ansaugung von Fluid, insbesondere Luft, aus der Umgebung führt.

Insbesondere kann über die Zusatzschlitze 162 eine gezielte Ringströmung, vorzugsweise eine Strömungswalze, im Übergangsbereich 110 erzeugt werden, wobei durch die Verwendung des Blendenelements 116 in dessen Schließstellung im Vergleich zu herkömmlichen Luftvorhängen eine geringere Höhe des Übergangsbereichs 110 überbrückt werden muss und somit eine geringere Trennfluidmenge, insbesondere ein geringerer Volumenstrom, zum Betrieb der Trennvorrichtung 108 ausreicht oder aber eine effizientere fluidwirksame Trennung der Räume 106 erzielt werden kann.

Vorteilhaft kann es insbesondere für die Ausbildung einer optimierten Strömungswalze sein, wenn die Trennvorrichtung 108 eine oder mehrere Absaugöffnungen 169 umfasst, mittels welcher ein Trennfluidstrom und/oder ein sonstiger Fluidstrom, insbesondere aus einem Übergangsbereich 110 zwischen den zwei Räumen 106 und/oder aus einem der Räume 106 und/oder aus beiden Räumen 106, absaugbar ist (siehe Fig. 4).

Eine oder mehrere Absaugöffnungen 169 sind insbesondere in einem Bodenbereich 171 der Trennvorrichtung 108 angeordnet, insbesondere in einen Boden integriert.

Die eine oder die mehreren Absaugöffnungen 169 sind insbesondere derart positioniert und/oder ausgebildet, dass ein in der Schließstellung des Blendenelements 116 aus dem Blendenelement 116 austretender Trennfluidstrom auf die eine oder die mehreren Absaugöffnungen 169 gerichtet ist.

Wie bereits erwähnt, muss für eine optimierte fluidwirksame Trennung der beiden Räume 106 das Blendenelement 116 möglichst lange in der Schließstellung angeordnet sein.

Beim Hindurchfördern eines Werkstücks 102 durch die Verbindungsöffnung 112 hängt die Zeitdauer, in welcher das Blendenelement 116 in der Offenstellung angeordnet ist, von der Fördergeschwindigkeit ab.

Die Behandlungsanlage 100 umfasst daher vorzugsweise ein optimiertes Fördersystem 170, mittels welchem eine beschleunigte Durchführung des Werkstücks 102 durch die Verbindungsöffnung 112 möglich ist.

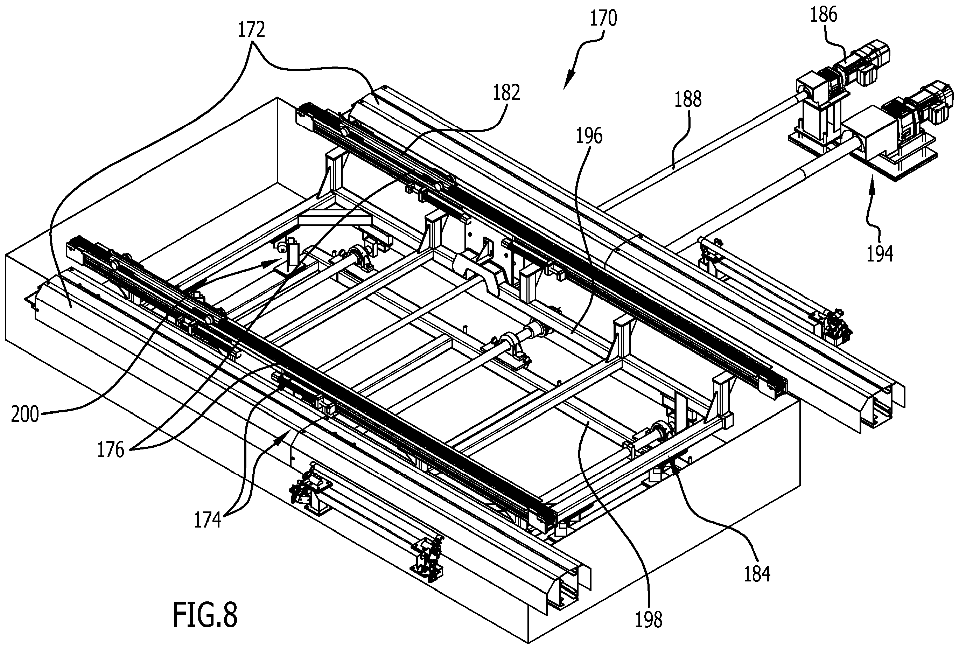

Wie insbesondere Fig. 8 zu entnehmen ist, umfasst das Fördersystem 170 eine erste Fördervorrichtung 172, welche beispielsweise als Kettenförderer 174 ausgebildet ist und der kontinuierlichen oder taktweisen Förderung von beispielsweise auf Skids montierten Werkstücken 102 dient.

Die erste Fördervorrichtung 172 dient insbesondere dazu, die Werkstücke 102 vergleichsweise langsam durch einen oder mehrere Behandlungsräume 104 der Behandlungsanlage 100 zu fördern, um letztlich eine möglichst lange Behandlungsdauer der Werkstücke 102 auf kurzer Förderstrecke zu erzielen.

Wird nun die erste Fördervorrichtung 172 zur Förderung der Werkstücke 102 durch die Verbindungsöffnung 112 der Trennvorrichtung 108 genutzt, können sich unerwünscht lange Öffnungszeiten des Blendenelements 116 ergeben.

Das Fördersystem 170 umfasst daher vorzugsweise eine zweite Fördervorrichtung 176, welche insbesondere eine im Vergleich zur ersten Fördervorrichtung 172 zügigere Förderung der Werkstücke 102 ermöglicht.

Die zweite Fördervorrichtung 176 erstreckt sich dabei vorzugsweise entlang der ersten Fördervorrichtung 172. Insbesondere weisen beide Fördervorrichtungen 172, 176 eine gemeinsame Förderrichtung 114 und/oder eine gemeinsame Förderstrecke auf.

Die zweite Fördervorrichtung 176 dient insbesondere dazu, die Werkstücke 102 nacheinander einzeln von der ersten Fördervorrichtung 172 abzuheben und kurzzeitig beschleunigt längs der Förderrichtung 114 zu fördern.

Die zweite Fördervorrichtung 176 umfasst insbesondere eine Aufnahmestation 178, an welcher die Werkstücke 102 von der ersten Fördervorrichtung 172 übernommen werden.

Ferner umfasst die zweite Fördervorrichtung 176 eine Abgabestation 180, an welcher die Werkstücke 102 insbesondere zurück an die erste Fördervorrichtung 172 übergeben werden.

Auch die zweite Fördervorrichtung 176 ist vorzugsweise ein Kettenförderer 174.

Sowohl die erste Fördervorrichtung 172 als auch die zweite Fördervorrichtung 176 umfassen jeweils ein oder mehrere Förderelemente 182, mittels welchen die Fördervorrichtungen 172, 176 insbesondere unmittelbar an einem zu fördernden Werkstück 102 oder einer Werkstückaufnahme, beispielsweise einem Skid, angreifen.

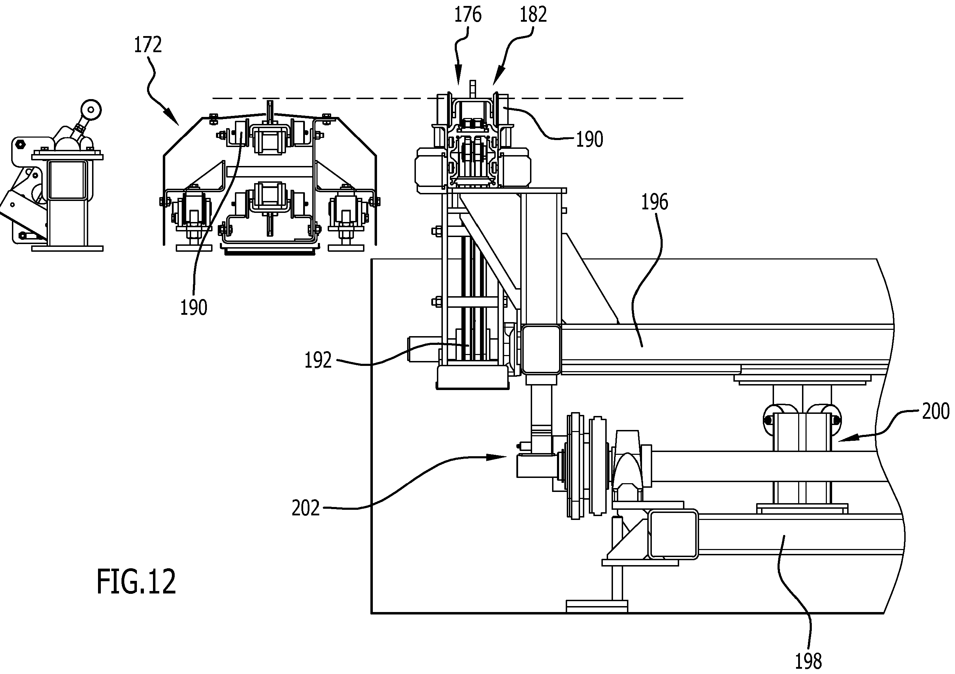

Die Frage, ob die Förderelemente 182 der ersten Fördervorrichtung 172 oder aber die Förderelemente 182 der zweiten Fördervorrichtung 176 an den Werkstücken 102 angreifen, hängt bei der in den Fig. 8 bis 14 dargestellten Ausführungsform des Fördersystems 170 davon ab, in welcher Höhe die Förderelemente 182 der zweiten Fördervorrichtung 176 relativ zu den Förderelementen 182 der ersten Fördervorrichtung 172 gebracht werden (s. insbesondere Fig. 12).

Die zweite Fördervorrichtung 176 umfasst hierzu eine Hubvorrichtung 184, mittels welcher die Förderelemente 182 der zweiten Fördervorrichtung 176 in vertikaler Richtung verstellbar, das heißt höhenverstellbar sind.

Zusammen mit den Förderelementen 182 werden vorzugsweise auch die weiteren üblichen und daher vorliegend nicht näher beschriebenen Komponenten der als Kettenförderer 174 ausgebildeten zweiten Fördervorrichtung 176 in ihrer jeweiligen Höhe verstellt.

Die Förderelemente 182 sind insbesondere Laufwagen 190 des Kettenförderers 174.

Zum Antreiben der Förderelemente 182 der zweiten Fördervorrichtung 176 ist vorzugsweise eine Kettenantriebsvorrichtung 186, beispielsweise ein Elektromotor, vorgesehen. Diese ist insbesondere mittels einer Kardanwelle 188 mit einer Antriebskette 192 der zweiten Fördervorrichtung 176 gekoppelt, um eine variierende Höhe der Antriebskette 192 durch Betätigung der Hubvorrichtung 184 kompensieren zu können.

Die Hubvorrichtung 184 umfasst vorzugsweise einen Hubantrieb 194.

Mittels des Hubantriebs 194 kann insbesondere ein Tragrahmen 196 der Hubvorrichtung 184 hinsichtlich seiner Höhe relativ zu einer Grundkonstruktion 198 der zweiten Fördervorrichtung 176 bewegt werden.

Ein oder mehrere Führungselemente 200, beispielsweise Führungsrollen, schränken vorzugsweise die Bewegungsmöglichkeit des Tragrahmens 196 relativ zu der Grundkonstruktion 198 auf eine Bewegung in ausschließlich vertikaler Richtung ein.

Der Tragrahmen 196 ist vorzugsweise mittels Exzenterelementen 202 mit der Grundkonstruktion 198 gekoppelt.

Diese Exzenterelemente 202 sind dabei vorzugsweise mittels des Hubantriebs 194 in unterschiedliche Drehausrichtungen bringbar, um letztlich den Tragrahmen 196 und damit die Förderelemente 182 der zweiten Fördervorrichtung 176 in unterschiedlichen Höhenpositionen anzuordnen.

Mittels des Hubantriebs 194 können somit die Förderelemente 182 der zweiten Fördervorrichtung 176 insbesondere an der Aufnahmestation 178 mit dem Werkstück 102 oder einer zugehörigen Werkstückaufnahme, beispielsweise einem Skid, in Eingriff gebracht werden, um das Werkstück 102 von der ersten Fördervorrichtung 172 abzuheben.

Durch Antreiben der Antriebskette 192 und somit der daran festgelegten Förderelemente 182 mittels der Kettenantriebsvorrichtung 186 kann das jeweils aufgenommene Werkstück 102 dann längs der Förderrichtung 114 bis zur Abgabestation 180 gefördert werden.

Die Zeitdauer zur Förderung des Werkstücks 102 von der Aufnahmestation 178 bis zur Abgabestation 180 beträgt dabei vorzugsweise höchstens ungefähr 50 %, vorzugsweise höchstens ungefähr 20 %, beispielsweise höchstens ungefähr 10 %, derjenigen Zeitdauer, welche für die Förderung des Werkstücks 102 um dieselbe Förderstrecke mittels der ersten Fördervorrichtung 172 vergehen würde.

Die zweite Fördervorrichtung 176 ist oder umfasst somit insbesondere eine Beschleunigungsvorrichtung 204, mittels welcher die Werkstücke 102 im Vergleich zur ersten Fördervorrichtung 172 beschleunigt förderbar sind.

Mittels der zweiten Fördervorrichtung 176 können dabei insbesondere bei einer Taktförderung der Werkstücke 102 ein oder mehrere Haltepositionen der Werkstücke 102 längs der Förderstrecke der ersten Fördervorrichtung 172 übersprungen werden. Insbesondere dann, wenn sich aufgrund der Ausgestaltung der ersten Fördervorrichtung 172 auch im Übergangsbereich 110 ein oder mehrere Haltepositionen ergeben würden, kann ein unerwünscht langer Aufenthalt der Werkstücke 102 im Übergangsbereich 110 durch die Verwendung der zweiten Fördervorrichtung 176 vermieden werden.

## Patentansprüche

1. Behandlungsanlage (100) zur Behandlung von Werkstücken (102), umfassend ein Fördersystem (170) zum Fördern der Werkstücke (102), insbesondere Fahrzeugkarosserien,
wobei das Fördersystem (170) Folgendes umfasst:
- eine erste Fördervorrichtung (172) zum Fördern der Werkstücke (102) mit einer ersten Geschwindigkeit und/oder mit einer ersten Taktzeit und
- eine zweite Fördervorrichtung (176), mittels welcher die Werkstücke (102) mit einer zweiten Geschwindigkeit und/oder mit einer zweiten Taktzeit förderbar sind,
wobei die zweite Geschwindigkeit vorzugsweise höher ist als die erste Geschwindigkeit und/oder wobei die zweite Taktzeit vorzugsweise kürzer ist als die erste Taktzeit,
wobei die Werkstücke (102) mittels der zweiten Fördervorrichtung (176) von der ersten Fördervorrichtung (172) übernehmbar und/oder an die erste Fördervorrichtung (172) übergebbar sind,
wobei mittels der ersten Fördervorrichtung (172) die Werkstücke (102) durch einen Behandlungsraum (104) der Behandlungsanlage (100) hindurchförderbar sind und wobei mittels der zweiten Fördervorrichtung (176) die Werkstücke (102) durch einen Übergangsbereich (110) zwischen dem Behandlungsraum (104) und einem weiteren Raum (106) hindurchförderbar sind,
wobei die Behandlungsanlage (100) ein Blendenelement (116) umfasst,
**dadurch gekennzeichnet, dass** das Blendenelement (116) zur temporären Verkleinerung einer Verbindungsöffnung (112) zwischen dem Behandlungsraum (104) und dem weiteren Raum (106) in einen Bewegungspfad (128) der Werkstücke (102) im Übergangsbereich (110) einbringbar ist,
wobei mittels einer Steuervorrichtung (130) der Behandlungsanlage (100) das Blendenelement (116) und die zweite Fördervorrichtung (176) derart steuerbar sind, dass das Blendenelement (116) aus dem Bewegungspfad (128) herausbewegt wird, wenn ein Werkstück (102) mittels der zweiten Fördervorrichtung (176) in den Übergangsbereich (110) eingebracht und/oder durch den Übergangsbereich (110) hindurchgefördert und/oder aus dem Übergangsbereich (110) herausbewegt wird.

2. Behandlungsanlage (100) nach Anspruch 1, **dadurch gekennzeichnet, dass** die zweite Fördervorrichtung (176) eine Hubvorrichtung (184) umfasst, mittels welcher die Werkstücke (102) von der ersten Fördervorrichtung (172) abhebbar und dabei mittels der zweiten Fördervorrichtung (176) aufnehmbar sind.

3. Behandlungsanlage (100) nach einem der Ansprüche 1 oder 2, **dadurch gekennzeichnet, dass** die zweite Fördervorrichtung (176) eine Hubvorrichtung (184) umfasst, mittels welcher die Werkstücke (102) auf die erste Fördervorrichtung (172) oder auf eine dritte Fördervorrichtung absenkbar und dabei an die erste Fördervorrichtung (172) oder die dritte Fördervorrichtung übergebbar sind.

4. Behandlungsanlage (100) nach einem der Ansprüche 2 oder 3, **dadurch gekennzeichnet,**
a) **dass** mittels der Hubvorrichtung (184) Förderelemente (182) der zweiten Fördervorrichtung (176) anhebbar und dabei insbesondere formschlüssig mit den Werkstücken (102) in Eingriff bringbar sind und/oder
b) **dass** mittels der Hubvorrichtung (184) Förderelemente (182) der zweiten Fördervorrichtung (176) absenkbar und dabei mit den Werkstücken (102) außer Eingriff bringbar sind.

5. Behandlungsanlage (100) nach einem der Ansprüche 1 bis 4, **dadurch gekennzeichnet, dass** die zweite Fördervorrichtung (176) sich nur längs eines Abschnitts einer Förderstrecke der ersten Fördervorrichtung (172) erstreckt.

6. Behandlungsanlage (100) nach einem der Ansprüche 1 bis 5, **dadurch gekennzeichnet, dass** die erste Fördervorrichtung (172) ein Taktförderer ist, mittels welchem die Werkstücke (102) innerhalb einer vorgegebenen Taktzeit jeweils von einer Halteposition zu einer längs einer Förderstrecke darauffolgenden weiteren Halteposition förderbar sind, wobei bei Erreichen einer vorgegebenen Halteposition innerhalb eines Takts der ersten Fördervorrichtung (172) und/oder während einer Verweilzeit der Werkstücke (102) an der jeweiligen Halteposition mittels der zweiten Fördervorrichtung (176) die Werkstücke (102) von der vorgegebenen Halteposition aufnehmbar und an eine andere Halteposition bringbar sind.

7. Behandlungsanlage (100) nach einem der Ansprüche 1 bis 6, **dadurch gekennzeichnet, dass** die erste Fördervorrichtung (172) ein Kettenförderer (174) ist und/oder dass die zweite Fördervorrichtung (176) ein Kettenförderer (174) ist.

8. Behandlungsanlage (100) nach einem der Ansprüche 1 bis 7, **dadurch gekennzeichnet, dass** die erste Fördervorrichtung (172) ein Kettenförderer (174) mit zwei separaten Ketten ist, wobei die Ketten miteinander synchronisiert sind und wobei eine der Ketten der Förderung der Werkstücke (102) bis hin zur zweiten Fördervorrichtung (176) dient und wobei eine weitere der Ketten der Förderung der Werkstücke (102) von der zweiten Fördervorrichtung (176) weg dient.

9. Behandlungsanlage (100) nach einem der Ansprüche 1 bis 8, **dadurch gekennzeichnet, dass** der Übergangsbereich (110) ein Schleusenbereich zur Minimierung eines Luftaustauschs zwischen dem Behandlungsraum (104) und dem weiteren Raum (106) ist und dass der Übergangsbereich (110) sich längs einer Förderstrecke des Fördersystems (170) mindestens so weit erstreckt, dass der Übergangsbereich (110) mindestens eine Halteposition der ersten Fördervorrichtung (172) umfasst oder zumindest mindestens eine solche Halteposition umfassen würde, wenn man eine Reihe von Haltepositionen der ersten Fördervorrichtung (172) bis in den Übergangsbereich (110) hinein verlängern würde.

10. Behandlungsanlage (100) nach einem der Ansprüche 1 bis 9, **dadurch gekennzeichnet, dass** die zweite Fördervorrichtung (176) eine Aufnahmestation (178) zur Aufnahme der Werkstücke (102) und eine Abgabestation (180) zur Abgabe der Werkstücke (102) umfasst, wobei die Aufnahmestation (178)
a) im Behandlungsraum (104); oder
b) im Übergangsbereich (110); oder
c) im weiteren Raum (106) angeordnet ist und/oder wobei die Abgabestation (180)
a) im weiteren Raum (106) oder
b) im Behandlungsraum (104) angeordnet ist.

## Claims

1. Treatment plant (100) for treating workpieces (102), comprising a conveying system (170) for conveying the workpieces (102), in particular vehicle bodies,
wherein the conveying system (170) comprises the following:
- a first conveying device (172) for conveying the workpieces (102) at a first speed and/or at a first step cycle time and
- a second conveying device (176) by means of which the workpieces (102) are conveyable at second speed and/or at a second step cycle time,
wherein the second speed is preferably higher than the first speed and/or wherein the second step cycle time is preferably shorter than the first step cycle time,
wherein the workpieces (102) are able to be taken over from the first conveying device (172) and/or are transferrable to the first conveying device (172) by means of the second conveying device (176),
wherein the workpieces (102) are conveyable through a treatment space (104) of the treatment plant (100) by means of the first conveying device (172) and wherein the workpieces (102) are conveyable through a transition region (110) between the treatment space (104) and a further space (106) by means of the second conveying device (176),
wherein the treatment plant (100) comprises a cover element (116), **characterized in that** the cover element (116) is introducible into a movement path (128) of the workpieces (102) in the transition region (110) for temporarily reducing a connecting opening (112) between the treatment space (104) and the further space (106),
wherein by means of a control device (130) of the treatment plant (100), the cover element (116) and the second conveying device (176) are controllable in such a way that the cover element (116) is moved out of the movement path (128) when a workpiece (102) is introduced into the transition region (110) and/or conveyed through the transition region (110) and/or moved out of the transition region (110) by means of the second conveying device (176).

2. Treatment plant (100) in accordance with Claim 1, **characterized in that** the second conveying device (176) comprises a lifting device (184), by means of which the workpieces (102) are liftable from the first conveying device (172) and thereby receivable by means of the second conveying device (176).

3. Treatment plant (100) in accordance with either of Claims 1 or 2, **characterized in that** the second conveying device (176) comprises a lifting device (184), by means of which the workpieces (102) are lowerable onto the first conveying device (172) or onto a third conveying device and thereby transferrable to the first conveying device (172) or the third conveying device.

4. Treatment plant (100) in accordance with either of Claims 2 or 3, **characterized in that**
a) by means of the lifting device (184), conveying elements (182) of the second conveying device (176) are raisable and thereby bringable into engagement with the workpieces (102), in particular in a positive-locking manner and/or
b) by means of the lifting device (184), conveying elements (182) of the second conveying device (176) are lowerable and thereby bringable out of engagement with the workpieces (102).

5. Treatment plant (100) in accordance with any one of Claims 1 to 4, **characterized in that** the second conveying device (176) extends only along a portion of a conveying path of the first conveying device (172).

6. Treatment plant (100) in accordance with any one of Claims 1 to 5, **characterized in that** the first conveying device (172) is a step-wise conveyor, by means of which the workpieces (102) are each conveyable within a predetermined step cycle time from a holding position to a subsequent further holding position along a conveying path, wherein upon reaching a predetermined holding position within a step cycle of the first conveying device (172) and/or during a dwell time of the workpieces (102) at the respective holding position, the workpieces (102) are receivable from the predetermined holding position and bringable to another holding position by means of the second conveying device (176).

7. Treatment plant (100) in accordance with any one of Claims 1 to 6, **characterized in that** the first conveying device (172) is a chain conveyor (174) and/or **in that** the second conveying device (176) is a chain conveyor (174).

8. Treatment plant (100) in accordance with any one of Claims 1 to 7, **characterized in that** the first conveying device (172) is a chain conveyor (174) with two separate chains, wherein the chains are synchronized with each other and wherein one of the chains serves to convey workpieces (102) to the second conveying device (176) and wherein a further one of the chains serves to convey the workpieces (102) away from the second conveying device (176).

9. Treatment plant (100) in accordance with any one of Claims 1 to 8, **characterized in that** the transition region (110) is a lock region for minimizing an air exchange between the treatment space (104) and the further space (106), and **in that** the transition region (110) extends along a conveying path of the conveying system (170) at least so far that the transition region (110) comprises at least one holding position of the first conveying device (172) or at least would comprise at least one such holding position if a series of holding positions of the first conveying device (172) were extended into the transition region (110).

10. Treatment plant (100) in accordance with any one of Claims 1 to 9, **characterized in that** the second conveying device (176) comprises a receiving station (178) for receiving the workpieces (102) and a hand-off station (180) for handing off the workpieces (102),
wherein the receiving station (178) is arranged
a) in the treatment space (104); or
b) in the transition region (110); or
c) in the further space (106)
and/or wherein the hand-off station (180) is arranged
a) in the further space (106) or
b) in the treatment space (104).

## Revendications

1. Installation de traitement (100) pour le traitement de pièces (102), comprenant un système de transport (170) pour transporter les pièces (102), en particulier des carrosseries de véhicule,
dans laquelle le système de transport (170) comprend ce qui suit :
- un premier dispositif de transport (172) pour transporter les pièces (102) à une première vitesse et/ou à une première cadence et
- un deuxième dispositif de transport (176), au moyen duquel les pièces (102) peuvent être transportées à une deuxième vitesse et/ou à une deuxième cadence,
dans laquelle la deuxième vitesse est de préférence plus élevée que la première vitesse et/ou dans laquelle la deuxième cadence est de préférence plus courte que la première cadence,
dans laquelle les pièces (102) peuvent être prises en charge par le premier dispositif de transport (172) et/ou peuvent être remises au premier dispositif de transport (172) au moyen du deuxième dispositif de transport (176),
dans laquelle les pièces (102) peuvent être transportées à travers un espace de traitement (104) de l'installation de traitement (100) au moyen du premier dispositif de transport (172) et dans laquelle les pièces (102) peuvent être transportées à travers une zone de transition (110) entre l'espace de traitement (104) et un autre espace (106) au moyen du deuxième dispositif de transport (176),
dans laquelle
l'installation de traitement (100) comprend un élément écran (116),
**caractérisée en ce que** l'élément écran (116) pour la diminution temporaire d'une ouverture de liaison (112) entre l'espace de traitement (104) et l'autre espace (106) dans une voie de déplacement (128) des pièces (102) peut être introduit dans la zone de transition (110),
dans laquelle l'élément écran (116) et le deuxième dispositif de transport (176) peuvent être commandés au moyen d'un dispositif de commande (130) de l'installation de traitement (100), de telle sorte que l'élément écran (116) est déplacé à l'extérieur de la voie de déplacement (128), lorsqu'une pièce (102) est introduite dans la zone de transition (110) au moyen du deuxième dispositif de transport (176) et/ou est transportée à travers la zone de transition (110) et/ou est déplacée à l'extérieur de la zone de transition (110).

2. Installation de traitement (100) selon la revendication 1, **caractérisée en ce que** le deuxième dispositif de transport (176) comprend un dispositif de levage (184), au moyen duquel les pièces (102) peuvent être retirées du premier dispositif de transport (172) et ce faisant reçues au moyen du deuxième dispositif de transport (176).

3. Installation de traitement (100) selon l'une quelconque des revendications 1 ou 2, **caractérisée en ce que** le deuxième dispositif de transport (176) comprend un dispositif de levage (184), au moyen duquel les pièces (102) peuvent être abaissées sur le premier dispositif de transport (172) ou sur un troisième dispositif de transport et ce faisant peuvent être remises au premier dispositif de transport (172) ou au troisième dispositif de transport.

4. Installation de traitement (100) selon l'une quelconque des revendications 2 ou 3, **caractérisée en ce**
a) **que** des éléments de transport (182) du deuxième dispositif de transport (176) peuvent être soulevés au moyen du dispositif de levage (184) et ce faisant peuvent être amenés en prise avec les pièces (102) en particulier par coopération de formes et/ou
b) **que** des éléments de transport (182) du deuxième dispositif de transport (176) peuvent être abaissés au moyen du dispositif de levage (184) et ce faisant peuvent être amenés hors de prise avec les pièces (102).

5. Installation de traitement (100) selon l'une quelconque des revendications 1 à 4, **caractérisée en ce que** le deuxième dispositif de transport (176) ne s'étend que le long d'une partie d'un trajet de transport du premier dispositif de transport (172).

6. Installation de traitement (100) selon l'une quelconque des revendications 1 à 5, **caractérisée en ce que** le premier dispositif de transport (172) est un transporteur cadencé, au moyen duquel les pièces (102) peuvent être transportées dans une cadence prédéfinie respectivement à partir d'une position de retenue vers une autre position de retenue suivante le long d'un trajet de transport, dans laquelle lors de l'atteinte d'une position de retenue prédéfinie dans un cycle du premier dispositif de transport (172) et/ou pendant un temps de séjour des pièces (102) dans la position de retenue respective, les pièces (102) peuvent être reçues à partir de la position de retenue prédéfinie et peuvent être amenées dans une autre position de retenue au moyen du deuxième dispositif de transport (176).

7. Installation de traitement (100) selon l'une quelconque des revendications 1 à 6, **caractérisée en ce que** le premier dispositif de transport (172) est un transporteur à chaînes (174) et/ou que le deuxième dispositif de transport (176) est un transporteur à chaînes (174).

8. Installation de traitement (100) selon l'une quelconque des revendications 1 à 7, **caractérisée en ce que** le premier dispositif de transport (172) est un transporteur à chaînes (174) avec deux chaînes séparées, dans laquelle les chaînes sont synchronisées les unes avec les autres et dans laquelle une des chaînes sert au transport des pièces (102) jusqu'au deuxième dispositif de transport (176) et dans laquelle une autre des chaînes sert au transport des pièces (102) à distance du deuxième dispositif de transport (176).

9. Installation de traitement (100) selon l'une quelconque des revendications 1 à 8, **caractérisée en ce que** la zone de transition (110) est une zone de sas pour réduire au minimum un échange d'air entre l'espace de traitement (104) et l'autre espace (106) et que la zone de transition (110) s'étend le long d'un trajet de transport du système de transport (170) au moins si loin que la zone de transition (110) comprend au moins une position de retenue du premier dispositif de transport (172) ou au moins comprendrait au moins une telle position de retenue, si on prolongeait une série de positions de retenue du premier dispositif de transport (172) jusqu'à l'intérieur de la zone de transition (110).

10. Installation de traitement (100) selon l'une quelconque des revendications 1 à 9, **caractérisée en ce que** le deuxième dispositif de transport (176) comprend une station de réception (178) pour recevoir les pièces (102) et une station de distribution (180) pour distribuer les pièces (102),
dans laquelle la station de réception (178) est disposée
a) dans l'espace de traitement (104) ; ou
b) dans la zone de transition (110) ; ou
c) dans l'autre espace (106)
et/ou dans laquelle la station de distribution (180) est disposée
a) dans l'autre espace (106) ou
b) dans l'espace de traitement (104).
